(19) Europäisches Patentamt
European Patent Office
Office européen des brevets

(11) **EP 4 614 991 A1**

(12) **EUROPEAN PATENT APPLICATION**
published in accordance with Art. 153(4) EPC

(43) Date of publication:
**10.09.2025  Bulletin 2025/37**

(21) Application number: 23886204.9

(22) Date of filing: **31.10.2023**

(51) International Patent Classification (IPC):
*H04N 23/57* (2023.01)    *H04N 23/54* (2023.01)
*H04N 23/55* (2023.01)    *G02B 7/02* (2021.01)
*B60W 40/08* (2012.01)    *G02B 13/00* (2006.01)
*H04N 23/00* (2023.01)    *G02B 1/04* (2006.01)

(52) Cooperative Patent Classification (CPC):
B60W 40/08; G02B 1/04; G02B 7/02; G02B 13/00;
H04N 23/00; H04N 23/54; H04N 23/55; H04N 23/57

(86) International application number:
**PCT/KR2023/017088**

(87) International publication number:
**WO 2024/096508 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022  KR 20220143125
02.06.2023  KR 20230071950**

(71) Applicant: **LG INNOTEK CO. LTD**
**Gangseo-gu**
**Seoul 07796 (KR)**

(72) Inventors:
• **KIM, Ki Cheol**
  **Seoul 07796 (KR)**
• **LIM, Jun Young**
  **Seoul 07796 (KR)**

(74) Representative: **Plasseraud IP**
**104 Rue de Richelieu**
**CS92104**
**75080 Paris Cedex 02 (FR)**

(54) **CAMERA MODULE AND DRIVING-ASSISTANT DEVICE**

(57)    A camera module provided by an embodiment of the invention may include: a head part having a side wall part, a receiving space in the side wall part, and multiple ribs; a lens barrel having an opening connected to the receiving space of the head part and a lens holder perpendicularly extending through the opening; a lens part having multiple lenses in the lens holder; and an image sensor for converting light incident from the multiple lenses into an electrical signal, wherein the multiple ribs are spaced apart from each other on an upper circumference of the opening, each of the multiple ribs has a first inclined surface on the upper circumference of the opening, the opening has a second inclined surface on the circumference thereof, a first angle which is an internal angle between the first inclined surface and a horizontal straight line is R1, a second angle which is an internal angle between the second inclined surface and a horizontal straight line is R2, and a view angle of the image sensor in a diagonal direction is FOV and satisfies equation 1: $R1 \leq 90-1(1/2*FOV)$.

FIG. 3

## Description

[Technical Field]

The embodiment of the invention relates to a camera module and a driving assistance device.

[Background Art]

If the driver's attention is distracted due to drowsiness or carelessness while driving, it inevitably leads to an accident. Accidents can occur due to drowsiness, smoking, and failure to pay attention to the front while driving. Since the consequences of carelessness are too great to leave this situation to the individual driver's attention alone, various driving assistance devices are being developed. There are various ways to recognize drowsy driving or careless driving. The method of filming the driver with a camera and analyzing the image is mainly used, and the Advanced Driver Assistance Systems (ADAS) are also used to receive lane departure information and recognize careless situations.

Advanced Driving Assistance System (ADAS) is an advanced driver assistance system to assist the driver in driving. It consists of sensing the situation ahead, judging the situation based on the sensed results, and controlling the behavior of the vehicle based on the situation judgment. For example, ADAS detects the vehicle ahead and recognizes the lane. Afterwards, when the target lane, target speed, and target ahead are determined, the vehicle's Electrical Stability Control (ESC), Engine Management System (EMS), Motor Driven Power Steering (MDPS), etc. are controlled. Representative examples of ADAS include automatic parking systems, low-speed city driving assistance systems, and blind spot warning systems. Sensor devices for sensing the situation ahead in ADAS include GPS sensors, laser scanners, front radars, and Lidar, and the most representative one is the front camera for photographing the front of the vehicle.

Recently, research on detection systems that detect the driver or the surroundings of the vehicle has been accelerated for the safety and convenience of the driver. The vehicle detection system monitors the driver's situation or condition, detects objects around the vehicle, and supports collisions with objects that the driver is unaware of, and also performs automatic parking, and is used for various purposes, and provides the most essential data for automatic vehicle control. The vehicle camera module is used by being built into front, interior, and rear surveillance cameras and black boxes in automobiles, and takes pictures or videos of surrounding subjects or drivers. Such vehicle camera modules can have poor shooting quality due to moisture and temperature, and have problems in that optical characteristics change depending on the ambient temperature and the material of the lens.

[Disclosure]

[Technical Problem]

An embodiment of the invention can provide a camera module for driving assistance. An embodiment of the invention can provide a camera module that can mitigate shape changes and optical characteristic changes due to temperature. An embodiment of the invention can provide a camera module that can mitigate optical characteristics due to temperature changes in areas between a lens barrel and optical lenses, between optical lenses and spacers, and between optical lenses and a separation member. Embodiments of the invention can provide a mobile terminal having a camera module and a driving assistance device of a mobile device such as a vehicle.

[Technical Solution]

A camera module according to an embodiment of the invention may comprise: a head portion having a side wall portion and a receiving space and a plurality of ribs within the side wall portion; a lens barrel having an opening connected to the receiving space of the head portion and having a lens holder penetrated vertically through the opening; a lens portion having a plurality of lenses within the lens holder; and an image sensor configured to convert light incident through the plurality of lenses into an electrical signal, wherein each of the plurality of ribs is spaced apart from each other on an upper periphery of the opening, wherein each of the plurality of ribs has a first inclined plane on the upper periphery of the opening, wherein the opening has a second inclined plane on the periphery, wherein a first angle, which is an internal angle between the first inclined plane and a horizontal straight line, represents R1, a second angle, which is an internal angle between the second inclined plane and a horizontal straight line, represents R2, and a diagonal field of view of the image sensor represents FOV, and wherein a mathematical expression 1: $90°-(3/4*FOV) \leq R1 \leq 90°-(1/2*FOV)$ is satisfied.

According to an embodiment of the invention, a mathematical expression 2: $90°-(3/4*FOV) \leq R2 \leq 90°-(1/2*FOV)$ may be satisfied. The second angle may be equal to or greater than the first angle. A mathematical expression 3: $40$ degrees $\leq FOV \leq 50$ degrees may be satisfied.

According to an embodiment of the invention, the first lens, closest to an object, among the plurality of lenses may have a convex shape on an object-side surface on the optical axis, an upper end of the first inclined surface may be disposed above a horizontal straight line passing through a center of an object-side surface of the first lens, and a lower end of the first inclined surface may be disposed below the horizontal straight line passing through the center of the object-side surface of the first lens.

According to an embodiment of the invention, a height of the head portion may represent D1, and a height of the lens holder may represent D2, which is a height from a lower surface of the head portion to a lower end of the lens holder, and condition 1: 1 < D2/D1 < 3 may be satisfied. A condition 2: 1 < D4/D5 < 3 may be satisfied. A condition 3: 1 < (D4*2)/(D1+D2) < 2 may be satisfied. A condition 3: 1 < (D4*2)/(D1+D2) < 2 may be satisfied. A maximum diameter of the head portion may represent B1, and a diameter of the opening may represent B0. A condition 4: 0.1 < B0/B1 < 0.6 may be satisfied.

According to an embodiment of the invention, the plurality of ribs may be radially disposed around the upper periphery of the opening, and an inner lower end of each of the plurality of ribs may be spaced apart from the upper end of the opening.

A camera module according to an embodiment of the invention may comprise: a head portion having a side wall portion and a receiving space and a plurality of ribs within the side wall portion; a lens barrel having an opening connected to the receiving space of the head portion and having a lens holder penetrated vertically through the opening; a plurality of lenses aligned along an optical axis within the lens holder; a light blocking film disposed on an outer periphery between adjacent two lenses; a spacing member disposed on an outer periphery to space apart adjacent plastic lenses among the plurality of lenses; an optical filter disposed on a lower portion of the lens holder and on the sensor side of the last lens; a support member disposed on an outer lower surface of the last lens and the periphery of the optical filter; and an image sensor configured to convert light incident through the plurality of lenses into an electrical signal, wherein each of the plurality of ribs may be spaced apart from each other on an upper periphery of the opening, wherein each of the plurality of ribs may have a first inclined plane on the upper periphery of the opening, wherein the opening may have a second inclined plane on the periphery, a first angle, which is an internal angle between the first inclined plane and a horizontal straight line, may represent R1, a second angle, which is an internal angle between the second inclined plane and a horizontal straight line, may represent R2, and a diagonal field of view of the image sensor may represent FOV, and wherein a mathematical expression 1: $90°-(3/4*FOV) \leq R1 \leq 90°-(1/2*FOV)$ and a mathematical expression 2: $90°-(3/4*FOV) \leq R2 \leq 90°-(1/2*FOV)$ may be satisfied.

According to an embodiment of the invention, a height of the head portion may represent D1, a height of the lens holder may represent D2, which is a height from a lower surface of the head portion to a lower end of the lens holder, an optical axis distance from a center of an object-side surface of the first lens closest to an object among the plurality of lenses to the image sensor may represent TTL, and the number of the plurality of lenses may be nL, wherein a condition 1: 4 < (nL*D1*D2)/TTL < 8 may be satisfied, where nL may be 3 to 5. A 1/2 of a maximum diameter of the head portion may represent D4, and a condition 2: D4 $\leq$ TTL may be satisfied.

According to an embodiment of the invention, an inner side of the spacer may have a third inclined plane, and an outer angle of the third inclined plane for a horizontal straight line may represent R4, and an inner angle of a straight line passing through a last end of the effective area of a sensor-side surface of the lens disposed on the object side of the spacer and a last end of the effective area of the object-side surface of the lens disposed on the sensor side may represent R3, a condition 3: FOV < R3 and a condition 4: R4 $\leq$ FOV may be satisfied. According to an embodiment of the invention, a condition 5: 54 degrees < R3 < 90 degrees may be satisfied.

According to an embodiment of the invention, the first lens, closest to an object, among the plurality of lenses may have a convex shape on an object-side surface on the optical axis, and an upper end of the first inclined surface may be disposed above a horizontal straight line passing through a center of an object-side surface of the first lens, and a lower end of the first inclined surface may be disposed below the horizontal straight line passing through the center of the object-side surface of the first lens.

According to an embodiment of the invention, a height of the head portion represents D1, and a height of the lens holder represents D2, which is a height from a lower surface of the head portion to a lower end of the lens holder, 1/2 of a maximum diameter of the lens holder represents D5, and a condition 6: 1 < D2/D1 < 3, a condition 7: 1 < D4/D5 < 3 may be satisfied. According to an embodiment of the invention, a maximum diameter of the head portion represents B1, and a diameter of the opening represents B0, and a condition 8: 1 < (D4*2)/(D1+D2) < 2 may be satisfied, and a condition 9: 0.1 < B0/B1 < 0.6 are satisfied.

In another embodiment of the invention, the driving assistance device disclosed above can include an infrared camera module.

[Advantageous Effects]

According to an embodiment of the invention, a camera module having at least one of lenses capable of alleviating changes in optical characteristics due to temperature change and/or a lens barrel is provided, thereby improving the reliability of the camera module. According to an embodiment of the invention, a camera module having a lens barrel or/and a spacer capable of alleviating physical changes due to temperature change is provided, thereby improving the reliability of the camera module.

According to an embodiment of the invention, by controlling the contact position or/and the contact area for a plastic lens, thermal deformation can be suppressed, thereby improving the reliability of the camera module. According to an embodiment of the invention, the distance between lenses in the camera module can be controlled using a spacer or/and a spacer member, thereby controlling the optical path and the amount of light. According to an embodiment of the invention, the optical reliability of the camera module can be improved, and the reliability of a vehicle camera device having the camera module can be improved.

[Description of Drawings]

FIG. 1 is a plan view of a camera module according to an embodiment of the invention.
FIG. 2 is an example of an A-A side cross-sectional view of the camera module of FIG. 1.
FIG. 3 is an example of a B-B side cross-sectional view of the camera module of FIG. 1.
FIG. 4 is an example of a housing coupled to the periphery of the lens barrel of FIG. 2.
FIG. 5 is a partial drawing illustrating the combination of the lens barrel and lenses and the optical path of the camera module of FIG. 2.
FIG. 6 is an enlarged view illustrating the separation member and the peripheral lenses in the camera module of FIG. 2.
FIG. 7 is an enlarged view illustrating the support member and the peripheral lenses in the camera module of FIG. 2.
FIG. 8 is a graph comparing the Modulation Transfer Function (MTF) characteristics of the camera module according to a comparative example and an embodiment of the invention.
FIG. 9 is an example of a vehicle having a camera module according to an embodiment of the invention.
FIG. 10 is a drawing illustrating a driving assistance device inside the vehicle of FIG. 9.

[Best Mode]

Hereinafter, a preferred embodiment of the present invention will be described in detail with reference to the attached drawings. The technical idea of the present invention is not limited to some of the embodiments described, but can be implemented in various different forms, and within the scope of the technical idea of the present invention, one or more of the components between the embodiments can be selectively combined or substituted and used. In addition, terms (including technical and scientific terms) used in the embodiments of the present invention can be interpreted as meanings that can be generally understood by those with ordinary knowledge in the technical field to which the present invention belongs, unless explicitly and specifically defined and described, and terms that are commonly used, such as terms defined in a dictionary, can be interpreted in consideration of the contextual meaning of the related technology.

In addition, terms used in the embodiments of the present invention are used to describe the embodiments and are not intended to limit the present invention. In this specification, singular forms may also include plural forms unless specifically stated in the phrase, and when described as "A and (and) B, C at least one (or more than one)", it may include one or more of all combinations that can be combined with A, B, C. In addition, when describing the components of the embodiments of the present invention, terms such as first, second, A, B, (a), (b), etc. may be used. These terms are only intended to distinguish the components from other components, and do not determine the nature, order, or sequence of the components by the terms. In addition, when a component is described as being "connected," "coupled," or "connected" to another component, the component may include not only the case where it is directly connected, coupled, or connected to the other component, but also the case where it is "connected," "coupled," or "connected" by another component between the component and the other component. In addition, when it is described as being formed or arranged "above or below" each component, the above or below includes not only the case where two components are in direct contact with each other, but also the case where one or more other components are formed or arranged between the two components. In addition, when expressed as "above or below," it may include the meaning of not only the upward direction but also the downward direction based on one component. In addition, the multiple embodiments described below can be combined with each other unless specifically stated otherwise. In addition, any part omitted in the description of one embodiment among the multiple embodiments can be applied to the description of the other embodiments unless specifically stated otherwise.

In the description of the invention, the first lens means the lens closest to the object side, and the last lens means the lens closest to the image side (or sensor surface). The last lens can include a lens adjacent to the image sensor. Unless otherwise specified, units for the radius, thickness/distance, TTL, etc. of the lens are all mm. In this specification, the shape of the lens is expressed based on the optical axis of the lens. For example, the meaning that the object-side of the lens is convex or concave means that the vicinity of the optical axis on the object-side of the lens is convex or concave, but does not mean that the area around the optical axis is convex or concave. Therefore, even if the object-side of the lens is described as convex, the area around the optical axis on the object-side of the lens can be concave, or can have the opposite shape. It is to be noted that the thickness and radius of curvature of the lens in this specification are measured based on the optical axis of the lens. That is, a convex surface of a lens can mean that the lens surface in an area corresponding to the optical axis has a convex shape, and a concave surface of a lens can mean that the lens surface in an area corresponding to the optical axis has a concave shape. In addition, the "object-side surface" can mean a surface of a lens facing the object side with respect to the optical axis, and the "sensor-side surface" can mean a surface of a lens facing the sensor side with respect to the optical axis.

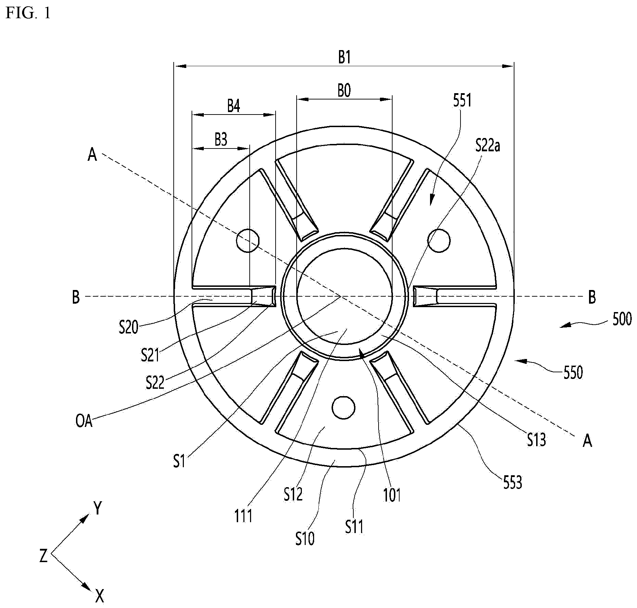

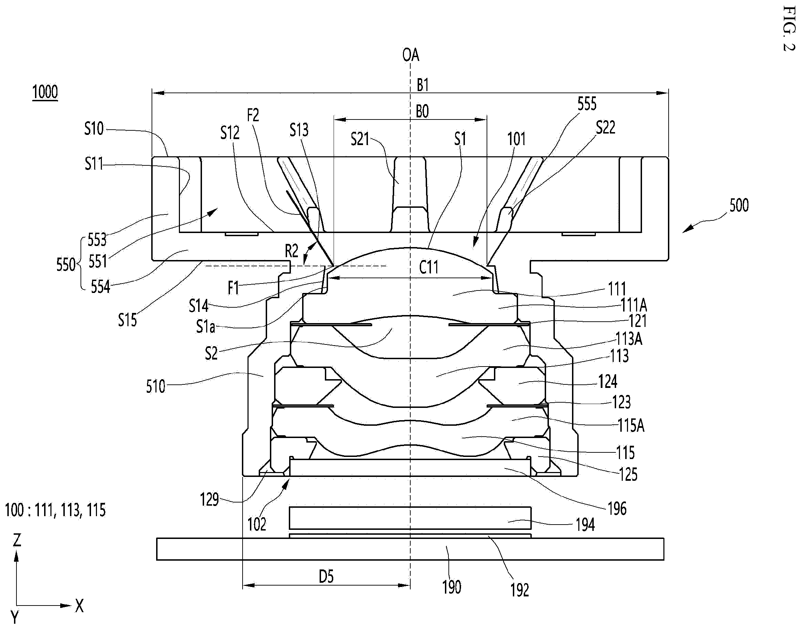

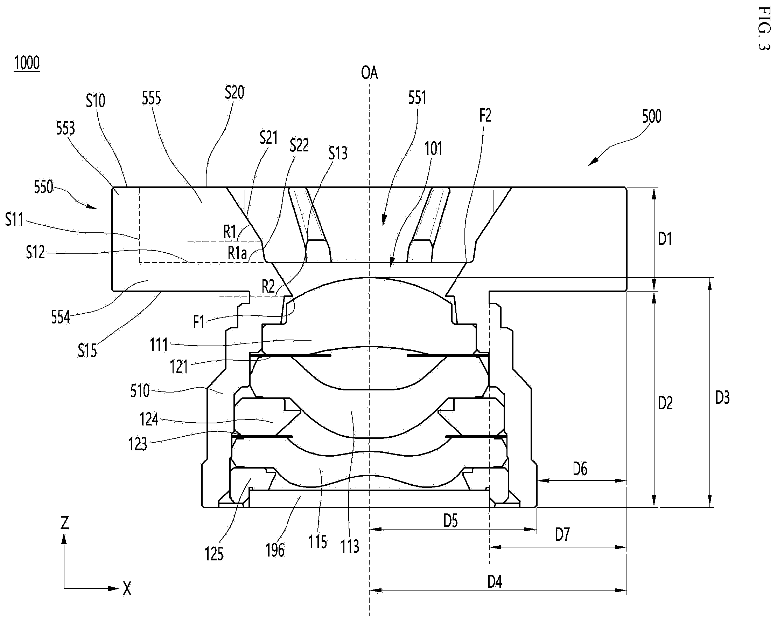

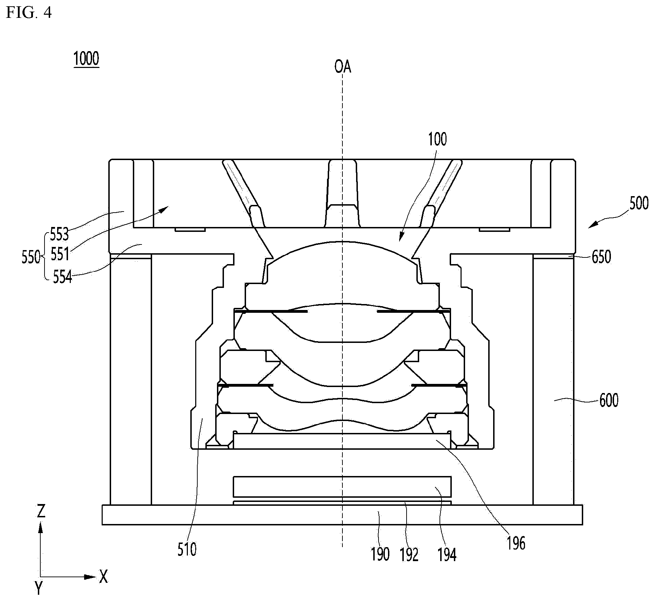

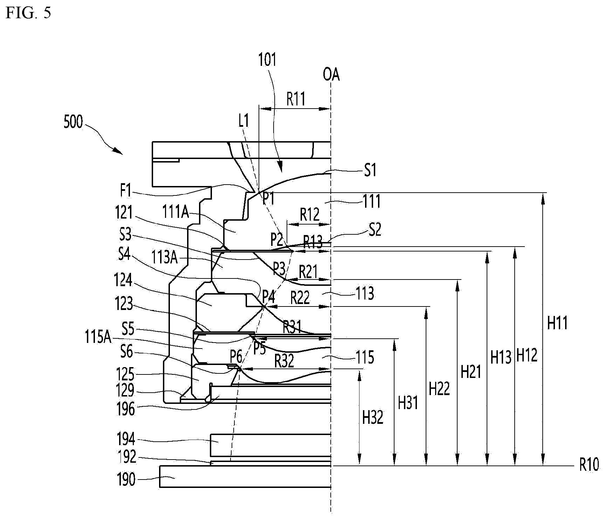

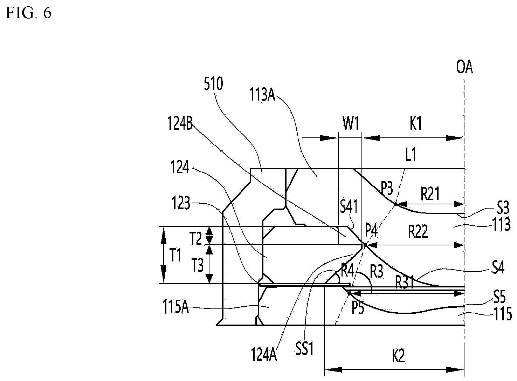

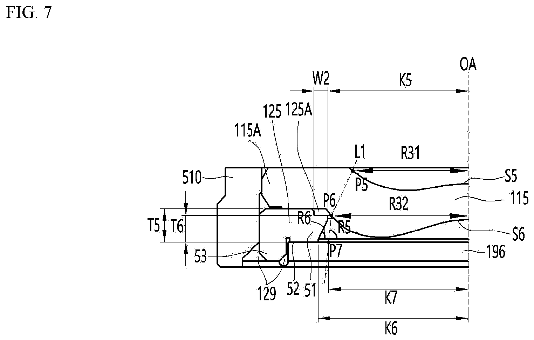

FIG. 1 is a plan view of a camera module according to an embodiment of the invention, FIG. 2 is an example of an A-A side cross-sectional view of the camera module of FIG. 1, FIG. 3 is an example of a B-B side cross-sectional view of the camera module of FIG. 1, FIG. 4 is an example of a housing coupled to the periphery of a lens barrel of FIG. 2, FIG. 5 is a partial view illustrating the coupling of the lens barrel and lenses and the optical path of the camera module of FIG. 2, FIG. 6 is an enlarged view explaining a spacer and peripheral lenses in the camera module of FIG. 2, and FIG. 7 is an enlarged view explaining a supporter and peripheral lenses in the camera module of FIG. 2.

Referring to FIGS. 1 to 3, a camera module 1000 according to an embodiment of the invention can include a lens barrel 500, a lens portion 100 having a plurality of lenses, a member 121, 123, 124 for maintaining a gap between adjacent lenses, and a supporter 125. At least one of the members 121, 123, 124 maintaining the above spacing can be a spacer or a light shield, and the other can be a spacer member.

The camera module 1000 can include a main substrate 190 and an image sensor 192 arranged on the sensor side of the lens portion 100. The camera module 1000 can include an optical cover glass 194 and an optical filter 196 between the last lens of the lens portion 100 and the image sensor 192. The lens portion 100 can be defined as an optical system. The lens portion 100 can be coupled inside the lens barrel 500. The lens portion 100 can be an optical system in which three or more or five or fewer lenses are laminated. The lens portion 100 can include three or more or fewer solid lenses.

The lens portion 100 can include at least one plastic lens, or at least one glass lens and a plastic lens. In the lens portion 100 according to an embodiment of the invention, the number of plastic lenses can be greater than or equal to two or more than the number of glass lenses. Here, the lens portion 100 can be laminated with plastic lenses or/and glass lens(es). Here, the plastic material can be at least 5 times higher than the coefficient of thermal expansion (CTE) of the glass material, and the change value of the refractive index according to the function of temperature can be at least 10 times higher for the plastic material than for the glass material.

The lens portion 100 can be aligned with the first lens 111, the second lens 113, and the third lens 115 along the optical axis (OA) toward the image sensor 192 on the object side. The second lens 113 can be arranged between the first lens 111 and the third lens 115. The third lens 115 can be arranged between the second lens 113 and the optical filter 196. As another example, a front lens can be further arranged on the object side of the first lens 111, or another lens can be further arranged between the first and second lenses 111, 113 or between the second and third lenses 113, 115. The lenses 111, 113, 115 of the lens portion 100 are coupled to the opening 101 in the lens barrel 500, and can be coupled, for example, from the sensor side toward the object side. Accordingly, the opening 101 can have an opening area on the object side of the first lens 111 closest to the object smaller than an opening area 102 on the sensor side of the last lens. As another example, the lenses 111, 113, 115 can be coupled from the object side of the lens portion 100 toward the sensor, or can be coupled from the object side to the sensor side. Hereinafter, the lenses 111, 113, 115 in the opening 101 of the lens barrel 500 will be described as an example of being coupled from the sensor side toward the object.

As shown in FIGS. 2 and 3, the opening 101 of the lens barrel 500 can be penetrated from the top to the bottom. The opening 101 can have a minimum diameter (B0) at the perimeter of the object-side surface (S1) of the first lens 101 closest to the object. The opening 101 is a bottomless area and can have a maximum diameter at the lower opening area 102. The lens barrel 500 can include a head portion 550 and a lens holder 510. The head portion 550 and the lens holder 510 can be formed integrally.

The head portion 550 can have an accommodation space 551 therein, and can be connected to an opening 101 of the lens holder 510 at the center of the accommodation space 551. The inner diameter of the accommodation space 551 can be more than twice the minimum diameter (B0) of the opening 101, for example, more than twice and less than four times. The inner diameter of the accommodation space 551 can be more than once and less than twice the lower diameter of the opening 101. Since the inner diameter of the above-mentioned accommodation space 551 is provided within the above-mentioned range, the combination with the outer frame, i.e., the upper housing, which is combined with the lens barrel 500 can be facilitated.

The outer diameter or maximum diameter (B1) of the head portion 550 can be larger than the lower outer diameter or maximum diameter of the lens holder 510. The lower inner diameter of the lens holder 510 can be larger than the upper inner diameter located around the first lens 111. The accommodation space 551 of the head portion 550 is open to the object-side area or the upper area, and can have an inner diameter larger than the lower outer diameter of the lens holder 510. The accommodation space 551 can have a concave center so as to be connected to the opening 101 of the lens holder 510. The lens holder 510 can extend from the center of the head portion 550 toward the sensor side.

The receiving space 551 of the head portion 550 includes a plurality of ribs 555, and the ribs 555 can extend from the optical axis toward the outer circumference. Adjacent ribs 555 can be spaced apart from each other at the same angle based on the optical axis (OA), for example, in the range of 40 to 180 degrees or in the range of 50 to 120 degrees, and preferably in the range of 50 to 75 degrees. The plurality of ribs 555 are spaced apart from each other within the receiving space 551, and can be arranged in the circumferential direction in the range of 2 to 8 or in the range of 5 to 7. The plurality of ribs 555 can be arranged in a radial shape around the opening 101. Accordingly, the rigidity of the head portion 550 can be prevented from being reduced by the plurality of ribs 555.

The head part 550 can be coupled to another transport device. The head part 550 has a bottom part 553 and a side wall part 554, and the bottom part 553 can include a bottom (S12) of the receiving space 551 and an opposite lower surface (S15). The side wall part 554 can include a side surface (S11) of the receiving space 551 and an opposite outer surface. The side wall part 554 can be bent vertically or in the direction of the optical axis from an end of the bottom part 553.

As shown in FIG. 2 and FIG. 3, the height (D1) of the head portion 550 is the outer surface height of the side wall portion 554 and can be smaller than the height (D2) of the lens holder 510. The sum of the height (D1) of the head portion 550 and the height (D2) of the lens holder 510 can be the height or thickness of the lens barrel 500. The height (D1) of the head portion 550 and the height (D2) of the lens holder 510 can satisfy the following condition 1.

$$\text{Condition 1: } 1 < D2/D1 < 3$$

In the condition 1, the head portion 550 can be provided in a range that facilitates the pickup of the camera module 1000 by the transport device by protruding to the height (D1). Preferably, $2mm \leq D1 \leq 3mm$ can be satisfied.

$$\text{Condition 2: } 1 < D3/D2 < 2$$

In Condition 2, D3 is an optical axis distance from the center of the object-side surface (S1) of the first lens 111 to the bottom of the lens holder 510. When the camera module 1000 satisfies Condition 2, the reduction in the amount of light incident on the object-side surface (S1) of the first lens 111 can be prevented, and the total length of the optical system, i.e., the total top length (TTL), can be set. The values of D2 and D3 can vary depending on the optical design, and can satisfy D2 < D3 < TTL. Here, TTL is the optical axis distance from the center of the object-side surface (S1) of the first lens 111 to the surface of the image sensor 192. Preferably, it is in the range of 3 mm < D2 < 6.5 mm, and can be in the range of 3.3 mm < D3 < 6.8 mm. Here, the height (D2) of the head portion 550 is a height for the active align process of the camera module 1000, and can be adjusted to compensate for the optical change of the BFL through the thermal compensation design, and can be determined according to, for example, the coefficient of thermal expansion (CTE) of the lens material, the effective diameter of the lens, and the amount of compensation for the size of the temperature change of the lens. As another example, a camera module having an optical system with a small TTL or an optical system considering thermal compensation can satisfy D3 < D2 < TTL.

$$\text{Condition 3: } 1 < D4/D5 < 3$$

In Condition 3, the D4 is a distance from the optical axis (OA) to the outer surface of the head portion 550 in a direction perpendicular to the optical axis (OA), which is half the diameter (B1) of the head portion 550. The D5 is half the lower outer diameter of the lens holder 510 or the lower radius of the lens holder 510. When the lens barrel 500 satisfies Condition 3, the operation of the transport device can be facilitated, an area for bonding the adhesive 650 to the lower surface (S15) of the bottom portion 553 can be secured, and the assembly problem of the camera module can be improved. Preferably, 1 < D4/D5 < 2 can be satisfied.

$$\text{Condition 3-1: } 1 < (D4*2)/(D1+D2) < 3$$

The Condition 3-1 is that the diameter (D4*2) of the head portion 550 is arranged to be larger than the height (D1+D2) of the lens barrel 500, thereby providing a lens barrel 500 having a slim height. Preferably, 1 < (D4*2)/(D1+D2) < 2 can be satisfied.

$$\text{Condition 3-2: } 1.5 < D4/D1 < 4$$

The Condition 3-2 is that the radius (D4) of the head portion 550 is arranged to be larger than the height (D1) of the head portion 550, thereby facilitating the operation of the transport device through the head portion 550. Preferably, 1 < (D4*2)/(D1+D2) < 2 can be satisfied.

## Condition 4: 1 < D5/D6 < 3

In Condition 4, the D6 is a horizontal distance between a straight line perpendicular to the outer surface of the head portion 550 and the outer surface of the lens holder 510, and can be a protruding length of the head portion 550 based on the lower portion of the lens barrel 500. This Condition 4 can secure an area for bonding the adhesive 650 through the lower surface (S15) of the bottom portion 553 by limiting the minimum protruding length of the head portion 550 within the lens barrel 500 to the above range. Preferably, 1.5 < D5/D6 < 2.5 can be satisfied, and 1.5 mm ≤ D6 ≤ 3 mm can be satisfied. In addition, D6 < D5 < D4 can be satisfied.

## Condition 5: D6 ≤ D7

In Condition 5, the D7 is the distance from the upper outer surface of the lens holder 510 to the outer surface of the head part 550, and is the maximum depth from the outer surface of the head part 550 to the upper outer surface of the lens holder 510. Here, when the depths (D7, D6) of the upper and lower outer surfaces of the lens holder 510 are the same, the upper and lower outer surfaces of the lens holder 510 can be injection-molded as vertical surfaces, which can facilitate processing. In addition, when D6 < D7, in the case of the injection shape of the lens barrel 500, the lens barrel can be applied to a pyramid-type optical system for dimensional stability and uniformity of barrel thickness. In addition, when the lens barrel is injected, a shape in which the mold can be separated from the top/bottom/left/right is required, so that D6 ≤ D7 or D6 < D7 can be satisfied.

## Condition 6: 0.1 < B0/B1 < 0.6

In Condition 6, the upper diameter (B1) of the opening 101 is designed to be less than 0.6 times the diameter (B1) of the head portion 550, so that the diameter of the opening 101 within the head portion 550 can be set.

The ribs 555 can be connected to the bottom portion 553 and the side wall portion 554. Each of the plurality of ribs 555 protrudes in the optical axis direction from the bottom portion 553 of the receiving space 551 and can have the same height. The thickness of the ribs 555 can be the width in the circumferential direction and can be the same. The lengths of the ribs 555 extending outward from the optical axis can be different depending on the region. For example, the upper length of each rib 555 can be shorter than the lower length. The lower length is the lower length of each rib 555 extending from the side surface (S11) of the side wall portion 555 toward the optical axis. The upper length is the upper surface length of each rib 555 extending from the side surface (S11) of the side wall portion 555 toward the optical axis. Here, the receiving space 551 can be provided as a coupling space of a space transport device capable of effectively receiving incident light, and a straight line distance from the upper end of the opening 101 to the side surface (S11) of the side wall portion 555 is a portion of the width (B4) of the bottom (S12). Here, the lower length (B2) of each rib 555 can be arranged to be smaller than a portion of the width (B4) of the bottom (S12). That is, the inner lower end of each rib 555 can be spaced from the upper end of the opening 101. Accordingly, interference of incident light around the upper end of the opening 101 can be blocked, or light loss around the upper end of the opening 101 can be reduced.

The upper end of the opening 101 can include a stepped portion (S22a) from the bottom (S12) of the receiving space 551, and the stepped portion (S22a) can be provided in a ring shape. This stepped portion (S22a) can prevent a problem of burrs occurring due to injection molding.

Each rib 555 can include a top surface (S20), a first inclined surface (S21), and a recess (S22). The upper surface (S20) of each rib 555 above can be extended in the same plane as the upper surface (S10) of the head portion 550 or the upper surface of the side wall portion 553. The first inclined surface (S21) can be inclined from the upper surface (S20) toward the opening 101. At least one or both of the upper surface (S20) and the second inclined surface (S21) can have an edge portion, which is a boundary portion between both sides of each rib 555, processed as a curved surface, thereby preventing a defect problem due to injection molding.

The internal angle between the straight line extending along the first inclined surface (S21) and the straight line (horizontal straight line) perpendicular to the optical axis (OA) can be the first angle (R1). The first angle (R1) can be 50 degrees or more, for example, in the range of 50 degrees to 65 degrees. Preferably, the first angle (R1) can be in the range of 55 to 60 degrees. The first angle (R1) of the first inclined surface (S21) can be an angle for interference with the effective field of view (FOV) of the opening 101 or the incident pupil, and if it is smaller than the range, the rigidity can be reduced or the pickup cannot be easy, and if it is larger than the range, the range of the effective field of view can be interfered with.

The inner surface of the opening 101 can have a second inclined plane (S13). The inner angle between the second inclined plane (S13) and the horizontal straight line is a second angle (R2), that is, the second angle (R2) can be inclined from the bottom of the receiving space 551 to the bottom of the second inclined plane (S13). The second angle (R2) can be 65 degrees or less, for example, in the range of 50 to 65 degrees. Preferably, the second angle (R2) can be in the range of 55 to 60 degrees. The second angle (R2) can be an angle for preventing interference with the effective field of view (FOV) of the opening 101 or the incident pupil, and if it is smaller than the range, unnecessary light can be introduced, and if it is larger than the range, there is a problem of affecting the effective field of view.

The second angle (R2) of the second inclined plane (S13) is an angle between a straight line passing between the upper end (F2) and the lower end (F1) of the second inclined plane (S13) and a horizontal straight line, and can extend to the periphery of the effective area of the object-side first surface (S1) of the first lens 111. The upper end (F2) of the second inclined plane (S13) can be positioned above a straight line perpendicular to the center of the object-side first surface (S1) of the first lens 111. The lower end (F1) of the first inclined plane (S13) can be positioned below a straight line perpendicular to the center of the object-side first surface (S1) of the first lens 111. The second inclined plane (S13) can be arranged around the periphery of the effective area of the object-side first surface (S1) of the first lens 111 and can function as an upper aperture.

The upper inner surface (S14) of the lens holder 510 adjacent to the second inclined surface (S13) extends outward from the lower end (F1) of the second inclined surface (S13) and can face the outer surface (S1a) arranged between the object-side first surface (S1) of the first lens 111 and the first flange portion 111A of the first lens 111. The upper inner surface (S14) of the lens holder 510 can be arranged to be inclined outward for insertion of the upper portion of the first lens 111, that is, the protrusion. That is, the upper inner surface (S14) of the lens holder 510 can have a diameter that gradually widens as it goes from the object toward the sensor, and the minimum diameter can be larger than the upper diameter (B0) of the opening 101. The upper diameter (C11) of the first lens 111 can be arranged to be larger than the upper diameter (B0) of the opening 101, and when C11 < BO, light traveling to the outer region (S1a) of the first surface (S1) of the first lens 111 can be reflected and focused onto the image sensor 192 through the lenses, which can cause ghosting or flare.

The first angle (R1) and the second angle (R2) can be the same, and as another example, the first and second angles (R1, R2) can have a difference of 5 degrees or less or 3 degrees or less. In addition, the condition of R1 ≤ R2 can be satisfied. That is, the second angle (R2) of the second inclined surface (S13) adjacent to the first lens 111 can be equal to or greater than the first angle (R1) of the first inclined surface (S21) disposed on the object side relative to the opening 101. Accordingly, the first and second inclined surfaces (S21, S13) can reduce interference of light traveling toward the opening 101 and cannot affect the angle of view of the effective optical system.

The recess (S22) can have a more concave shape than the straight line extending along the first inclined surface (S21). The inclination angle (R1a) of the surface of the recess (S22) can be 65 degrees or more, for example, in the range of 65 to 85 degrees or in the range of 70 to 85 degrees. The inclination angle (R1a) of the surface of the recess (S22) can be greater than the first angle (R1) and the second angle (R2). The lower end of the recess (S22) can be connected to the bottom (S12) of the receiving space 551 and can be spaced apart from the upper end (F2) of the opening 101. Accordingly, when the ribs 555 are injection-molded, the mold can be provided up to the inner lower end of each rib 555, thereby preventing a defect in which the inner lower end of each rib 555 penetrates into the area of the opening 101. In addition, when the ribs 555 are molded, the separation of the injection mold can be facilitated.

The angle of view of the camera module 1000 can be defined as a diagonal angle of view, FOV or DFOV (Diagonal FOV). The above diagonal angle of view is the angle of view of the entire optical system in the diagonal direction of the image sensor 192. The horizontal angle of view (HFOV: Horizontal FOV) of the camera module 1000 is the angle of view of the entire optical system in the long-axis direction of the image sensor 192, and the vertical angle of view (VFOV: Vertical FOV) is the angle of view of the entire optical system in the short-axis direction of the image sensor 192. The above diagonal angle of view can be larger than the horizontal angle of view and the vertical angle of view.

$$\text{Condition 7: } 90°\text{-}(3/4*FOV) \leq R1 \leq 90°\text{-}(1/2*FOV)$$

$$\text{Condition 8: } 90°\text{-}(3/4*FOV) \leq R2 \leq 90°\text{-}(1/2*FOV)$$

In Conditions 7 and 8, each of the first and second angles (R1, R2) can be greater than the angle of view (FOV) and less than 90 degrees, and preferably, can be in the range of 49.5 degrees to 63 degrees or less. Since the opening 101 has a circular shape, the second angle (R2) of the second inclined surface (S13) can be provided to be less than the largest diagonal angle of view, thereby reducing the loss of incident light. If the lower and upper limits of the first and second angles (R1, R2) of the above conditions 1 and 2 are exceeded, the path of light incident at the effective angle of view within the lens barrel 510 can be obstructed or the amount of light can be reduced, the rigidity of the rib can be reduced, and the increase in the opening 101 can provide a cause for an increase in the inflow of foreign substances from the outside, and light amount control can be difficult.

In order for the opening 101 of the lens holder 510 to not interfere with the angle of view of the optical system, the following conditions can be satisfied.

$$\text{Condition 9: } 90°\text{-}(3/4*DFOV) \leq R2 \leq 90° - (DFOV*0.5)$$

$$\text{Condition 10: } R1 \leq R2$$

The DFOV is the angle of view in the diagonal direction of the image sensor, and can be 40 degrees or more, for example, in the range of 40 degrees to 60 degrees or in the range of 40 degrees to 50 degrees. Preferably, the first angle (R1) can be 62.5 degrees or less or in the range of 57.5 degrees±5 degrees, and the second angle (R2) can be 57.5 degrees±5 degrees. This camera module 1000 is a camera for a driving assistance device, and can be provided as a camera for driver monitoring to prevent accidents due to the driver's drowsiness, smoking, or failure to look ahead while driving. Accordingly, the angle of view of the camera module 1000 is provided in the above range, so that the driver's condition and surrounding situation can be accurately sensed. The above camera module 1000 can be applied to an infrared camera.

An ImgH is 1/2 of the diagonal length of the image sensor. The first and second angles (R1, R2) can satisfy the following conditions.

$$\text{Condition 11: } ImgH*11 \leq R1 \leq ImgH*14$$

$$\text{Condition 12: } ImgH*11 \leq R2 \leq ImgH*14$$

In conditions 11 and 12, the first and second angles (R1, R2) can satisfy condition 11: $ImgH*12 \leq R1 \leq ImgH*13.5$ and/or condition 12: $ImgH*12 \leq R2 \leq ImgH*13.5$. By satisfying the above conditions according to the area of the image sensor 192, it is possible to prevent a decrease in the amount of light incident on the image sensor 192 and block unnecessary light from being incident. In the specification, * indicates multiplication.

The lens holder 510 of the lens barrel 550 has a shape with different outer diameters, and even if thermal deformation occurs due to the lenses 111, 113, 115 inside, the material and outer diameter of the lens holder 510 and the materials of the lenses can effectively suppress thermal deformation of the lens(es). The lens holder 510 has at least two or three or more lenses disclosed above inside, and can include, for example, first to third lenses 111, 113, 115. The lens holder 510 can be a barrel part having a first outer diameter on the outside of the first lens 111, a second outer diameter on the outside of the second lens 113, and a third outer diameter on the outside of the third lens 115. The sizes of the above outer diameters can have a relationship of first outer diameter < second outer diameter < third outer diameter. The lens holder 510 can have a constant thickness on the outer side of each lens 111, 113, 115, and the thickness is a straight line distance from the inner surface of the contact side to the outer surface of each lens 111, 113, 115. Here, the inner diameter of the lens holder 510 can satisfy a relationship of first inner diameter < second inner diameter < third inner diameter when the inner diameter of the inner surface that contacts each lens 111, 113, 115 is divided into the inner first inner diameter of the first outer diameter, the inner second inner diameter of the second outer diameter, and the inner third inner diameter of the third outer diameter.

As shown in FIG. 4, a housing 600 can be coupled to the outer periphery of the lens holder 510. A part of the housing 600 can be positioned between the outer periphery of the main substrate 190 and the lower side of the head portion 550. The housing 600 can support between the lower surface (S15) of the head portion 550 and the main substrate 190. The housing 600 can be bonded to the lower surface (S15) of the head portion 550 with an adhesive 650. The housing 600 protects the outer surface of the lens barrel 500 and the image sensor 192, blocks the inflow of foreign substances, and can be coupled to a moving body such as a vehicle. The housing 600 can be adhered to the upper surface of the main substrate 190 and can be adhered to the bonding surface of the lens barrel 500, i.e., the outer lower surface of the head portion 550, with an adhesive 650. The adhesive 650 can be a resin material such as an epoxy material or a silicone material.

Each of the lenses 111, 113, 115 can include an effective area having an effective diameter through which light is incident and a non-effective area outside the effective area. The flange portion 111A, 113A, 115A of the lenses 111, 113, 115 can be a non-effective area. The non-effective area can be an area where light is blocked by the first light blocking film 121 and the second light blocking film 123. The above flange portion 111A, 113A, 115A can extend in a direction orthogonal to the optical axis (OA) in the effective area of the lens 111, 113, 115, in the radial direction, or in the circumferential direction.

A first light blocking film 121 can be arranged on the outer periphery between the first lens 111 and the second lens 113, and the first light blocking film 121 can function as a member that blocks light in the non-effective area and can be used as an aperture. At least one of a spacer member 124 that maintains a gap and a second light blocking film 123 can be arranged on the outer periphery between the second lens 113 and the third lens 115. The spacer member 124 can have an internal hole and can be formed in a ring shape. The above-mentioned spacer 124 can be arranged between the second light blocking film 123 and the second lens 113. The spacer 124 can be positioned closer to the object than the second light blocking film 123, and the second light blocking film 123 can be positioned closer to the sensor than the spacer 124. Since the second lens 113 has a convex meniscus shape toward the sensor, the spacer 124 can be arranged on the outer periphery of the second lens 113 to maintain the outer gap between the second and third lenses 113, 115.

The spacer 124 can maintain the outer gap between the second and third lenses 113, 115. In the absence of the above-described spacer 124, the flange portions of the two lenses aligned in the optical axis direction can come into contact or can come into contact with the second light blocking film 123. At least one or all of the first light blocking film 121, the spacer 124, and the second light blocking film 123 can function as a spacer that maintains the gap between the lenses 111, 113, 115. The first light blocking film 121, the spacer 124, and the second light blocking film 123 can control the amount and path of light using internal holes and perform the function of blocking incident light.

The thickness of the first and second light blocking films 121, 124 can be thinner than the thickness (T1) of the spacer 124. Here, the stop can be formed of the first light blocking film 121, or can be arranged around the sensor-side second surface (S2) of the first lens 111, or can be used as the sensor-side second surface (S2).

A support member 125 can be arranged around the lower periphery of the third lens 115, and the support member 125 can press the third lens 115 to prevent it from being detached from the lower side, or can maintain a gap with the optical filter 196. Here, the support member 125 can be bonded to the optical filter 196 and the inner surface of the lens barrel 500 using an adhesive material 129. The outer diameter of the lens barrel 500 can be smallest at the outer periphery of the first lens 111, and can gradually increase toward the outer periphery of the third lens 115. The outer diameter of the lens barrel 500 can be largest at the outer circumference of the third lens 115 or the outer circumference of the optical filter 196.

Referring to FIG. 5, the camera module 1000 having the lens barrel 500 can secure optical performance by controlling the path of the first light (L1) that proceeds to the end of the effective area of each lens 111, 113, 115 of the optical system. The first lens 111 can have negative or positive power, and preferably, can have positive power. The first lens 111 is closest to the object, and the first surface (S1) on the object side on the optical axis (OA) can have a convex shape, and the second surface (S2) on the sensor side can have a concave shape. As another example, the first surface (S1) on the object side on the optical axis (OA) can have a concave shape, and the second surface (S2) on the sensor side can have a concave shape. As another example, the first surface (S1) on the object side on the optical axis (OA) can have a convex shape, and the second surface (S2) on the sensor side can have a convex shape. The first lens 111 can be made of glass. The first lens 111 can be provided as a spherical lens made of glass. As another example, the first lens 111 can be provided as an aspherical lens made of glass. As another example, the first lens 111 can be provided as an aspherical lens made of plastic.

If the first lens 111 is made of glass, when the camera module 1000 is exposed to light inside or outside the vehicle, discoloration due to the plastic material can be prevented, and deformation due to heat can be reduced. If the camera module 1000 is placed inside the vehicle or is not exposed to the outside of the vehicle, the first lens 111 can be made of glass or plastic. The first lens 111 can have a refractive index of 1.7 or higher, or in the range of 1.8 to 2.3. When expressed as an absolute value, the radius of curvature of the first surface (S1) of the first lens 111 can be smaller than the radius of curvature of the second surface (S2). The difference between the radius of curvature of the first surface (S1) and the radius of curvature of the second surface (S2) of the first lens 111 can be 1 mm or higher, and can be, for example, in the range of 1 mm to 3 mm.

The center thickness of the first lens 111 can be the thickest among the lenses of the lens portion 100, and can be, for example, 1.2 mm or more. The effective diameter of the first surface (S1) of the first lens 111 can be larger than the effective diameter of the second surface (S2). The first lens 111 can include a first flange portion 111A on the outside. A portion of the outside of the first flange portion 111A can be in contact with the inner surface of the lens barrel 500.

The second lens 113 and the third lens 115 can have different materials from the first lens 111. The second lens 113 can have negative or positive power, and preferably, positive power. The second lens 113 can be made of glass or plastic, and preferably, can be made of plastic. The second lens 113 is arranged between the first lens 111 and the third lens 115, and can have a second flange portion 113A on the outside. On the optical axis, the object-side third surface (S3) of the second lens 113 can be concave, and the sensor-side fourth surface (S4) can be convex. As another example, the object-side third surface (S3) can be convex, and the sensor-side fourth surface (S4) can be concave. As another example, the object-side third surface (S3) can be convex, and the sensor-side fourth surface (S4) can be convex. The third surface (S3) and the fourth surface (S4) can be aspherical on the optical axis. An outer portion of the second flange portion 113A of the second lens 113 can be in contact with the inner surface of the lens barrel 500.

The power of the third lens 115 can have the same sign as the power of at least one of the first lens 111 and the second lens 113. The third lens 115 can have negative or positive power, and preferably, positive power. When the first to third lenses 111, 113, 115 have the same positive power, the total optical axis length (TTL) can be reduced. The third lens 115 can be made of glass or plastic, and preferably, can be made of plastic. The third lens 115 is arranged between the second lens 113 and the optical filter 196, and can have a third flange portion 115A on the outside. The object-side fifth surface (S5) of the third lens 115 on the optical axis can be convex, and the sensor-side sixth surface (S6) can be concave. As another example, the object-side fifth surface (S5) can be concave, and the sensor-side sixth surface (S6) can be convex. As another example, the object-side fifth surface (S5) can be concave, and the sensor-side sixth surface (S6) can be concave. The fifth surface (S5) and the sixth surface (S6) can be aspherical on the optical axis. A portion of the outer side of the third flange portion 115A of the third lens 115 can be in contact with the inner surface of the lens barrel 500.

The refractive index of the second lens 113 can be lower than that of the first lens 111, and can be less than 1.7, for example, in the range of 1.45 to 1.69. The difference in the refractive indices between the second lens 113 and the first lens 111 can be 0.2 or more. The refractive index of the third lens 115 can be lower than that of the first lens 111, and can be less than 1.7, for example, in the range of 1.45 to 1.69. The difference in the refractive indices between the third lens 115 and the first lens 111 can be 0.2 or more. When expressed as an absolute value, the radius of curvature of the third surface (S3) of the second lens 113 can be greater than the radius of curvature of the convex fourth surface (S4), and can be, for example, 7 mm or less or in the range of 5 mm to 7 mm. The radius of curvature of the fourth surface (S4) can be less than 5 mm in absolute value, and can range from 2 mm to 4.99 mm, for example. The difference between the radius of curvature of the third surface (S3) of the second lens 113 and the radius of curvature of the fourth surface (S4) can be 1 mm or more, and can range from 1 mm to 4 mm, for example. When expressed in absolute value, the radius of curvature of the fifth surface (S5) of the third lens 115 can be larger than the radius of curvature of the concave sixth surface (S6), and can range from 1.1 mm to 3 mm, for example. The radius of curvature of the sixth surface (S6) can be 2 mm or less in absolute value, and can range from 1.1 mm to 2 mm, for example. The difference between the radius of curvature of the fifth surface (S5) and the radius of curvature of the sixth surface (S6) of the third lens 115 can be 1.3 mm or less. When representing an absolute value, the lens surface having the maximum radius of curvature can be the third surface (S3), and the lens surface having the minimum radius of curvature can be the sixth surface (S6). The absolute value of the maximum radius of curvature can be more than twice the minimum radius of curvature.

The central thickness of the second lens 113 can be the second thickest among the lenses of the lens portion 100, and can be thinner than the central thickness of the first lens 111 and thicker than the central thickness of the third lens 113. The central spacing between the first lens 111 and the second lens 113 can be smaller than the thickness of the first lens 111, and larger than the central spacing between the second and third lenses 113, 115. The effective diameter of the third surface (S3) of the second lens 113 can be smaller than the effective diameter of the fourth surface (S4). The effective diameter of the third surface (S4) can be larger than the effective diameter size of the second surface (S2) and smaller than the effective diameter of the first surface (S1). The effective diameter of the fifth surface (S5) of the third lens 115 can be smaller than the effective diameter of the sixth surface (S6). The effective diameter of the sixth surface (S6) can be the largest among the lenses.

The second lens 113 is made of plastic or glass, and in the case of plastic, the thermal expansion coefficient is higher than that of glass, so that deformation due to heat can occur more significantly. In an embodiment of the invention, when the second lens 113 is made of plastic and thermal deformation occurs due to a difference in the radius of curvature of the third surface (S3) and the fourth surface (S4), the load due to contact between the outer surface of the second flange portion 113A and the inner surface of the lens holder 510 can be reduced, thereby alleviating the thermal deformation. That is, by reducing the contact area between the outer surface of the second flange portion 113A of the second lens 113 and the lens holder 510 and positioning the contact position of the outer surface closer to the sensor side than the object side, the difference in the radius of curvature of the third and fourth surfaces (S3, S4) of the second lens 113 and the thermal deformation due to the plastic material can be alleviated. Accordingly, the outer surface of the second lens 113 can have non-contacted inclined surfaces on the upper and lower parts of the contacted surfaces.

The outer surface of the third flange portion 115A of the third lens 115 can be in contact with the inner surface of the lens holder 510. When the third lens 115 is made of plastic, the length of the outer contact surface of the third flange portion 115A can be 50% or less of the thickness of the third flange portion 115A or can be in the range of 20% to 50%. In addition, when the third lens 115 is made of plastic, it can have a higher coefficient of thermal expansion than a glass material, so that deformation due to heat can occur more significantly. In an embodiment of the invention, when the radii of curvature of the fifth surface (S5) and the sixth surface (S6) of the third lens 115 are different, the outer surface of the third flange portion 115A can be positioned so that the contact position with the inner surface of the lens holder 510 is positioned closer to the sensor side so that the difference in the radii of curvature of the two surfaces (S5, S6) and the thermal deformation due to the plastic material are minimized, and a non-contact area larger than the contact area is provided.

The camera module 1000 according to the embodiment of the invention can block light leakage and control the light path and amount by means of a member 121, 123, 124 that is arranged on the outer periphery between the lenses 111, 113, 115 to maintain a gap. At least one or all of the members 121, 123, 124 that maintain the gap are formed of a plastic material and can expand or contract depending on the plastic lens. Accordingly, the members 121, 123, 124 that maintain the gap can reduce thermal deformation of the plastic lens and reduce the problem of the optical axes of the lenses 111, 113, 115 being misaligned. Light incident on the lens portion 100 is refracted and transmitted along the effective area of each lens 111, 113, 115 and is transmitted to the image sensor 192 through the optical filter 196 and the cover glass 194. The image sensor 192 above converts the incident light into an electrical signal. At this time, the member 121, 123, 125 maintaining the spacing can be placed outside the boundary between the effective and ineffective areas of the two adjacent lenses 111, 113, 115.

As the member 121, 123, 124 maintaining the spacing, the first light blocking film 121, the spacing member 124, and the second light blocking film 123 block and absorb light that deviates from the optical path among the incident light, and can control the amount of light that passes through the holes of the first light blocking film 121, the spacing member 124, and the second light blocking film 123, and the holes of the support member 125. The first light blocking film 123 is arranged between the first flange portion 111A of the first lens 111 and the second flange portion 115A of the second lens 113, and can extend in the direction of the optical axis. The first light blocking film 121 can have a thickness of 0.1 mm or less, for example, a range of 0.01 mm to 0.1 mm or a range of 0.01 mm to 0.04 mm. The first light blocking film 121 has the thickness and a light absorbing layer on the upper and/or lower surfaces, so that light that deviates from the optical path or has an abnormal path is absorbed. The second light blocking film 123 can be arranged between the second flange portion 113A of the second lens 113 and the third flange portion 115A of the third lens 115. The first and second light blocking films 123 above are formed of a plastic material and can include a light-absorbing layer. The second light blocking film 123 can have a thickness of 0.1 mm or less, for example, in a range of 0.01 mm to 0.1 mm or in a range of 0.01 mm to 0.04 mm. The second light blocking film 123 has the above thickness and has a light-absorbing layer on the upper and/or lower surfaces, so that light that deviates from the optical path or has an abnormal path is absorbed. The first and second light blocking films 121, 123 can be of the same material. The first and second light blocking films 121, 123 can include a Poly Ethylene (PE) film or a polyester (PET)-based film. The first and second light blocking films 121, 124 can have a multilayer structure and can have the same laminated structure. The first and second light blocking films 121, 124 can have the same thickness. The first light blocking film 121 is formed of a plastic material and can include a light-absorbing layer.

The spacer 124 is arranged between the second flange portion 113A of the second lens 113 and the third flange portion 115A of the third lens 115, and can space the third flange portion 115A of the third lens 115 from the second flange portion 113A of the second lens 113 by a predetermined interval. The spacer 124 can include a Poly Ethylene (PE) film or a polyester (PET) film. As another example, at least one of the first and second light blocking films 121, 123 and the spacer 124 can be formed of a metal or alloy and an oxide film can be formed on the surface thereof. The material included in the above metal or alloy can include at least one of In, Ga, Zn, Sn, Al, Ca, Sr, Ba, W, U, Ni, Cu, Hg, Pb, Bi, Si, Ta, H, Fe, Co, Cr, Mn, Be, B, Mg, Nb, Mo, Cd, Sn, Zr, Sc, Ti, V, Eu, Gd, Er, Lu, Yb, Ru, Y, and La. The oxide film can be an oxide material treated with black oxide or brown oxide using copper.

The image sensor 192 can be placed on the main substrate 190. The main substrate 190 can be mounted, settled, in contact with, fixed, temporarily fixed, supported, or coupled to the image sensor 192 on a plane intersecting the optical axis (OA). Alternatively, according to another embodiment, a groove or hole (not shown) capable of accommodating the image sensor 192 can be formed on the main substrate 190, and the embodiment is not limited to a specific form in which the image sensor 192 is placed on the main substrate 180. The main substrate 190 can be a rigid PCB or FPCB. The image sensor 192 can perform a function of converting light passing through the lens portion 100 into image data. A sensor module can be placed on the lower portion of the lens barrel 500 to surround the image sensor 192 and protect the image sensor 192 from external foreign substances or impact. The image sensor 192 can be one of a Charge Coupled Device (CCD) or a Complementary Metal-Oxide Semiconductor (CMOS), a CPD, and a CID. When there are multiple image sensors 192, one can be a color (RGB) sensor and the other can be a black and white sensor.

The optical filter 196 can be arranged between the lens portion 100 and the image sensor 192. The optical filter 196 can filter light corresponding to a specific wavelength range for light passing through the lenses 111, 113, 115. The optical filter 196 can be an infrared (IR) blocking filter that blocks infrared rays or an ultraviolet (UV) blocking filter that blocks ultraviolet rays, but the embodiment is not limited thereto. The optical filter 196 can be arranged on the image sensor 192.

The cover glass 194 is arranged between the optical filter 196 and the image sensor 192, and can protect the upper portion of the image sensor 192 and prevent the reliability of the image sensor 192 from being deteriorated. The camera module 1000 according to an embodiment of the invention can include a driving member (not shown), and the driving member can move or tilt a barrel having at least one of the lenses in the optical axis direction or/and in a direction orthogonal to the optical axis direction. The camera module can include an Auto Focus (AF) function or/and an Optical Image Stabilizer (OIS) function. The camera module 1000 according to an embodiment of the invention can be applied to an infrared camera or a driver monitoring camera.

As shown in FIG. 5, the ends (P1-P6) of the effective areas of each of the first to third lenses 111, 113, 115 can be effective radii based on the optical axis (OA). The effective radius of the first surface (S1) of the first lens 111 is R11, which is a straight-line distance from the optical axis to the end (P1) of the effective area, the effective radius of the second surface (S2) is R12, which is a straight-line distance from the optical axis to the end (P2) of the effective area, the effective radii of the third and fourth surfaces (S3, S4) of the second lens 113 are R21, R22, which are straight-line distances from the optical axis (OA) to the end (P3, P4) of the effective area, the effective radius of the fifth surface (S5) of the third lens 115 is R31, which is a straight-line distance from the optical axis (OA) to the end (P5) of the effective area, and the effective radius of the sixth surface (S6) is R32, which is a straight-line distance from the optical axis (OA) to the end of the effective area. In addition, the distance in the direction of the optical axis to the end of the effective area of each of the first surface (S1) to the sixth surface (S6) of each lens 111, 113, 115 based on the surface (R10) of the image sensor 192 can be defined as H11, H12, H21, H22, H31, H32.

The inner end of the first light blocking film 121 can be arranged closer to the optical axis than the end (P2) of the effective area of the second surface (S2). The inner end of the first light blocking film 121 can be arranged closer to the second surface (S2) than to the third surface (S3). Here, when the first light blocking film 121 functions as an aperture and the radius of the inner hole is ST_R0, the following condition can be satisfied.

$$\text{Condition 13: } R11 < R12 < ST\_RO$$

$$\text{Condition 14: } ST\_R0 < R21 < R22 < R31 < R32$$

According to Conditions 13 and 14, the effective diameter from the object-side surface of the first lens 111 to the aperture gradually decreases, and can gradually increase from the aperture to the effective diameter of the last lens surface. The light traveling inside the optical system can be cut by the position and inner diameter of the first light blocking film 121 to set the required optical performance, for example, relative illuminance (RI) and F number of 2.2 or less.

The end (P1) of the effective area of the first surface (S1) of the first lens 111 can be arranged closest to the bottom (F1) of the opening 101. The optical axis distance from the end (P1-P6) of the effective area of each lens surface (S1-S6) to the surface of the image sensor 192 can satisfy the following conditions.

$$\text{Condition 15: } 1 < H11/H12 < 1.5$$

$$\text{Condition 16: } 1.3 < H11/H21 < 1.7$$

$$\text{Condition 17: } 1 < H21/H22 < 1.5$$

$$\text{Condition 18: } 2 < H11/H31 < 3$$

$$\text{Condition 19: } 1.2 < H31/H32 < 1.6$$

$$\text{Condition 20: } (H12-H21) < (H22-H31)$$

By conditions 15, 17, and 19, the effective radius and edge thickness of the first to sixth surfaces (S1-S6) of the first, second, and third lenses 111, 113, and 115 can be set, so that the path of the first light (L1) that proceeds to the outermost part of the effective area of the lenses can be set. By conditions 16 and 18, the edge thickness of each lens and the edge spacing between adjacent lenses can be set from the end (P1) of the effective area of the first surface (S1) of the first lens 111. In condition 20, the value of (H12-H21) can set the edge spacing between the first lens 111 and the second lens 113, and the value of (H22-H31) can set the edge spacing between the second lens 113 and the third lens 115. The thickness (T1, FIG. 6) of the spacing member 124 can be set by condition 20.

$$\text{Condition 21: } (H22-H31) < T1$$

In Condition 21, the thickness (T1) of the spacing member 124 can be secured by the convex sensor-side surface (S4) of the second lens 113 and the gull-shaped object-side surface (S6) of the third lens 115. Preferably, $1 < T1/(H22-H31) < 1.5$ can be satisfied.

The camera module according to the embodiment disclosed above can satisfy at least one or two or more of the Mathematical Expressions described below. Accordingly, the camera module according to the embodiment can have improved optical characteristics. For example, when the camera module satisfies at least one Mathematical Expression, the camera module can alleviate thermal deformation of the lenses, effectively control aberration characteristics such as chromatic aberration and distortion aberration, and can have good optical performance at the center and periphery of the field of view (FOV). In addition, the camera module 1000 can have improved resolution. In addition, the thickness of the lens on the optical axis (OA) and the spacing of adjacent lenses on the optical axis (OA) described in the Mathematical Expressions can refer to the above-described embodiments.

$$[\text{Mathematical Expression 1}] \; 1 < CT1/CT2 < 2$$

CT1 is the central thickness of the first lens 111, and CT2 is the central thickness of the second lens 113. If the camera module satisfies Mathematical Expression 1, the aberration characteristics of the optical system can be improved.

$$[\text{Mathematical Expression 2}]\ 2 < CT1/CT3 < 4$$

CT3 is the central thickness of the third lens 115. If the camera module satisfies Mathematical Expression 2, the aberration characteristics of the optical system can be improved.

$$[\text{Mathematical Expression 3}]\ 1 < CT1/CG1 < 2.5$$

CG1 is the center spacing between the first and second lenses. If the camera module satisfies Mathematical Expression 3, the center thickness of the first lens 111 and the center spacing between the first and second lenses can be set to provide good optical performance at the set angle of view and focal length, and TTL can be reduced.

$$[\text{Mathematical Expression 4}]\ 2 < CT2/CG2 < 5$$

CG2 is the center spacing between the second and third lenses. If the camera module satisfies Mathematical Expression 4, the center thickness of the second lens 113 and the center spacing between the second and third lenses can be set to provide good optical performance at the set angle of view and focal length, and TTL can be reduced.

$$[\text{Mathematical Expression 5}]\ 1.7 < n1$$

In Mathematical Expression 5, n1 is the refractive index of the first lens 111 at the d-line. When Mathematical Expression 5 is satisfied, the first lens 111 can refract light from the convex first surface (S1) to the effective area of the second surface (S2) with the smallest effective diameter.

$$[\text{Mathematical Expression 6}]\ n3*v3 < n1*v1$$

In Mathematical Expression 6, n3 is the refractive index of the third lens at the d-line, and v1 and v3 are the Abbe numbers of the first and third lenses. When the camera module satisfies Mathematical Expression 6, the first lens 111 can guide the incident light to the effective area of the third lens 115.

$$[\text{Mathematical Expression 7}]\ L1R1 > 0$$

L1R1 is the radius of curvature of the object-side surface (S1) of the first lens 1 1 1 on the optical axis. If Mathematical Expression 7 is satisfied, the amount of incident light of the first lens 111 can be increased.

$$[\text{Mathematical Expression 8}]\ L1R1 < L1R2$$

L1R2 is the radius of curvature of the sensor-side surface (S2) of the first lens 111 on the optical axis. If Mathematical Expression 8 is satisfied, the internal hole size of the first light blocking film 121 can be reduced, and the overall TTL can be reduced.

$$[\text{Mathematical Expression 9}]\ L1R2*CA12 < L1R1*CA11$$

CA11, CA12 are the effective diameter of the object-side surface (S1) of the first lens 111 and the effective diameter of the sensor-side surface (S2). If Mathematical Expression 9 is satisfied, the amount of incident light can be increased by the small radius of curvature and the large effective diameter of the first surface (S1).

$$[\text{Mathematical Expression 10}]\ 1 < CA\_Max/CA\_Min < 3$$

CA_Max is the maximum effective diameter among the lens surfaces (S1-S6) of each lens, and CA_Min is the minimum effective diameter among the lens surfaces (S1-S6) of each lens. If Mathematical Expression 10 is satisfied, the size of the camera module and the external shape of the lens holder 510 can be set.

$$[\text{Mathematical Expression 11}] \quad 1 < CA11/CA12 < 3$$

If Mathematical Expression 11 is satisfied, the path of light traveling to the aperture (Stop) can be controlled by setting the effective diameter difference between the first and second surfaces (S1, S2) of the first lens 111.

$$[\text{Mathematical Expression 12}] \quad 0.5 < CA11/CA32 < 1$$

CA32 is the effective diameter of the sixth surface (S6) of the third lens 115. If Mathematical Expression 12 is satisfied, the effective diameter difference between the first surface (S1, S2) of the first lens 111 and the sensor-side surface (S6) of the last lens can be set, thereby controlling factors affecting performance changes according to CRA and temperature. In addition, the sizes of the first and third lenses 111, 115 can be controlled.

$$[\text{Mathematical Expression 13}] \quad 2mm < ImgH$$

ImgH is 1/2 of the diagonal size of the image sensor 192. If Mathematical Expression 13 is satisfied, an optical system having a sensor size of a vehicle camera can be provided. Mathematical Expression 52 preferably satisfies 2mm < ImgH < 4mm.

$$[\text{Mathematical Expression 14}] \quad 1 < TTL/(ImgH*2) < 2$$

TTL is the optical axis distance from the center of the first surface (S1) of the first lens 111 to the image sensor 192. If Mathematical Expression 14 is satisfied, the length of the entire optical system can be set relative to the size of the image sensor.

$$[\text{Mathematical Expression 15}] \quad 0 < BFL/ImgH < 1$$

BFL is the optical axis distance from the center of the sensor-side surface of the last lens to the surface of the image sensor. If Mathematical Expression 15 is satisfied, the installation space of the component (194, 196) between the image sensor and the last lens can be secured, and the space for guiding light from the last lens toward the image sensor can be provided.

$$[\text{Mathematical Expression 16}] \quad 0 < CA\_Max/(D1+D2) < 1$$

In Mathematical Expression 16, (D1+D2) is the height of the lens barrel 500, which represents the sum of the height of the lens holder 510 and the height of the head part (520). If Mathematical Expression 16 is satisfied, the maximum effective diameter of the lens surface and the height of the lens barrel 500 can be set, thereby setting the size of the camera module.

$$[\text{Mathematical Expression 17}] \quad 0 < TD/(D1+D2) < 1$$

TD is the optical axis distance from the object side of the first lens 111 to the sensor side of the last lens in the lens holder. If Mathematical Expression 17 is satisfied, the optical axis lengths of the lenses in the lens holder and the length of the lens barrel can be set.

$$[\text{Mathematical Expression 18}] \quad 0 < CA\_Max/B1 < 0.5$$

B1 is the maximum effective diameter of the lens barrel and is the outer diameter of the head. If Mathematical Expression 18 is satisfied, the maximum effective diameter of the lens surface and the maximum effective diameter of the lens barrel can be set to facilitate injection and assembly of the lens barrel.

$$[\text{Mathematical Expression 19}] \quad 1 < CA\_Max/B0 < 1.5$$

B0 is the diameter of the opening 101 of the lens portion 100. If Mathematical Expression 19 is satisfied, the maximum effective diameter of the lenses and the size of the opening 101 can be set to control the path of the incident light.

## [Mathematical Expression 20] $0.5 < CA11 / B0 < 1$

If Mathematical Expression 20 is satisfied, the size of the opening 101 and the effective diameter of the object-side surface of the first lens 111 can be set to block the inflow of light that proceeds through an unnecessary path.

## [Mathematical Expression 21] $0.3 < CA32/(D5*2) < 0.7$

D5 is a straight line distance from the optical axis to the lower outer surface of the lens holder 510, and is a lower radius of the lens holder 510. If Mathematical Expression 21 is satisfied, the last lens placed in the lens holder 510 and the lower outer diameter of the lens holder 510 can be set to the above range, thereby facilitating the coupling of the last lens.

## [Mathematical Expression 22] $0.7 < D2/FD < 1.2$

FD represents the distance from the center of the object-side surface of the first lens 111 to the lower surface of the optical filter. If Mathematical Expression 22 is satisfied, the height of the lens holder 510 can be set based on the optical axis distance from the first lens coupled in the lens holder 510 to the optical filter.

## [Mathematical Expression 23] $0.4 < CA\_FD/(D5*2) < 0.9$

CA_FD is the effective length of the optical filter, which is the average of the effective lengths of the 7th surface on the object side and the 8th surface on the sensor side as shown in Table 1. If Mathematical Expression 23 is satisfied, the optical filter having the maximum effective length and the size and the lower outer diameter of the lens holder 510 can be set within the lens holder 510.

## [Mathematical Expression 24] $0 < nGL < nPL$

nGL is the number of glass lenses among the lenses, and nPL is the number of plastic lenses among the lenses. If Mathematical Expression 24 is satisfied, the thermal change within the camera module can be alleviated, and the plastic lenses can improve optical characteristics such as aberration and distortion.

## [Mathematical Expression 25] $4 < (nL*D1*D2)/TTL < 8$

nL is the total number of lenses in the lens holder 510, and is 3 to 5. If Mathematical Expression 25 is satisfied, the size of the camera module compared to the total TTL can be set.

## [Mathematical Expression 26] $1 < Fno < nL$

Fno is the F number of the optical system. If Mathematical Expression 26 is satisfied, a bright optical system can be provided. Here, Fno can satisfy $2\pm0.2$.

## [Mathematical Expression 27] $10 < \sum Abbe/\sum Index < 30$

$\Sigma$Abbe means the sum of the Abbe numbers of each of the plurality of lenses. $\Sigma$Index means the sum of the refractive indices of each of the plurality of lenses. If Mathematical Expression 27 is satisfied, the optical system can have improved aberration characteristics and resolution. In Mathematical Expression 27, the optical characteristics can be controlled by setting the sum of the Abbe numbers and the sum of the refractive indices of the lenses, and preferably $15 < \Sigma Abbe/\Sigma Index < 25$ can be satisfied.

## [Mathematical Expression 28] $40° \leq FOV \leq 50°$

FOV is the field of view ((Field of view)) of the optical system in the camera module, that is, the diagonal field of view. Even if a glass lens and a plastic lens are mixed and used in the camera module, Mathematical Expression 28 can prevent the deterioration of the optical characteristics through temperature compensation and aberration correction. Or, even if a spherical lens and an aspherical lens are mixed and used in the camera module, Mathematical Expression 28 can prevent the deterioration of the optical characteristics through temperature compensation and aberration correction.

$$[\text{Mathematical Expression 29}] \; TTL \leq 9mm$$

In Mathematical Expression 29, the optical axis distance from the center of the first surface (S1) of the first lens 111 to the surface of the image sensor within the camera module is set, thereby reducing the size of the camera module. Preferably, D4 ≤ TTL can be satisfied.

The lens data of the first lens 111 to the third lens 115 according to the embodiment of the invention are as shown in Table 1.

[Table 1]

| Lens | Surface | Curvature radius (mm) | Thickness/s pacing (mm) | Refractive index | Abbe number | Effective diameter (mm) |
|---|---|---|---|---|---|---|
| First lens | S1 | 3.223 | 1.641 | 2.051 | 26.90 | 3.243 |
| | S2 (stop) | 5.188 | 1.015 | | | 1.839 |
| Second lens | S3 | -5.568 | 1.163 | 1.661 | 20.40 | 2.176 |
| | S4 | -3.430 | 0.339 | | | 2.917 |
| Third | S5 | 1.606 | 0.589 | 1.661 | 20.40 | 3.50 |
| lens | S6 | 1.391 | 0.333 | | | 4.047 |
| Optical filter | S7 | 1.00E+18 | 0.300 | 1.513 | 54.50 | 4.169 |
| | S8 | 1.00E+18 | 0.500 | | | 4.275 |
| Cover glass | S9 | 1.00E+18 | 0.4 | 1.513 | 54.50 | 4.548 |
| | S10 | 1.00E+18 | 0.045 | | | 4.689 |
| Image sensor | | 1.00E+18 | 0.00 | | | 4.529 |

Table 1 illustrates the items of the Mathematical Expressions described above in the camera module 1000 of the embodiment, which represent the radius of curvature of the lens surfaces of each lens, the central thickness of each lens, the central spacing between adjacent lenses, the refractive index of each lens, the Abbe number, and the effective radius of each lens surface. The values for each of the above items can have an error range of 0.5% or less. Here, when the lens portion 100 is laminated by mixing and mixing plastic lenses and at least one glass lens, the thermal deformation caused by the lenses of the plastic material can be minimized. For example, by providing the relaxation structure of the second and third lenses 113, 115 so that it can be compensated for according to the thermal deformation, the MTF change rate of the diffraction optical performance at a high temperature (e.g., 80 to 105 degrees) compared to a room temperature (e.g., 20 to 30 degrees) can be provided to be 10% or less. The high temperature can include the temperature inside or outside the vehicle. In order to alleviate thermal deformation of the second and third lenses 113, 115 in the embodiment of the invention, the material of the lens barrel 500 can be a heat-dissipating material, a material the same as that of a plastic lens, or a metal material. The material of the lens barrel 500 according to the embodiment of the invention can be a plastic material, for example, a plastic material having the same thermal expansion coefficient as or the same material as that of a plastic lens. The head portion 550 of the lens barrel 500 can include a top-view shape of a cylindrical shape or a polygonal cylindrical shape. A hydrophilic material can be coated or applied to the surface of the lens barrel 500. As another example, the lens barrel 500 can be selected from a metal material, for example, Al, Ag, or Cu, and can be Al or an Al alloy. When the lens barrel 500 is made of metal, the heat transferred laterally to the lenses 111, 113, 115 can be dissipated, and thermal deformation of the lenses 111, 113, 115 can be suppressed.

Referring to FIG. 6, the spacer 124 can be placed between the second lens 113 and the second light blocking film 123, and can be in the shape of a ring having an inner hole. The hole inner diameter (K1) of the spacer 124 can be larger than the hole inner diameter of the first light blocking film 121, and smaller than the hole inner diameter of the second light blocking film 123. Each hole inner diameter can be a minimum diameter. The spacer 124 can be made of a different material from the light-absorbing material of the first and second light blocking films 121, 124. The above-mentioned spacer 124 can be made of a plastic material or a plastic material capable of injection molding. The thickness (T1) of the above-mentioned spacer 124 can be thicker than the first and second light blocking films 121, 124. The thickness (T1) of the above-mentioned spacer 124 can be thicker than the sum of the thicknesses of the first and second light blocking films 121, 124.

When the thickness (T1) of the above-mentioned spacer 124 is CT2 and the center thickness of the second and third lenses 113, 115 is CT2 and CT3, the condition: CT2 ≤ T1 < CT3 can be satisfied. The thickness (T1) of the above-mentioned spacer 124 can be 0.7 mm or more, for example, in the range of 0.7 mm to 1.1 mm, or in the range of 0.8 mm to 0.1 mm.

The spacer 124 includes an inner end 124A protruding inwardly and a second recess 124B on an inner upper side. The inner end 124A can extend from the upper surface of the third flange portion 115A to an end (P4) of an effective area of the fourth surface (S4) of the second lens 113. The inner end 124A of the spacer 124 can be arranged with an inner side surface that is inclined, and an upper end of the inclined surface can be arranged closer to the optical axis (OA) than a lower end. An end (or an upper end of the inclined surface) of the inner end 124A of the spacer 124 can correspond to or be arranged adjacent to an end (P4) of an effective area of the fourth surface (S4).

The third inclined surface (SS1) of the inner end 124A of the spacer 124 can vertically overlap with the end (P5) of the effective area of the fifth surface (S5) of the third lens 115. That is, the third inclined surface (SS1), which is the inclined inner surface of the spacer 124, becomes farther from the optical axis (OA) from the top to the bottom, so that it can escape from the interference position of the first light (L1) passing through the end (P4) of the effective area of the fourth surface (S4) and the end (P5) of the effective area of the fifth surface (S5). The third inclined surface (SS1) of the inner end 124A of the above-mentioned spacer 124 overlaps the second light blocking film 123 by more than 50% in the vertical direction, so that light reflected by the third inclined surface (SS1) does not proceed to the effective area of the lenses and can be absorbed by the second light blocking film 123.

The above-mentioned spacer 123 can prevent the occurrence of phenomena such as ghosts or flares due to stray light. The position of the upper end of the inner end 124A of the above-mentioned spacer 124 or the upper end of the third inclined surface (SS1) is spaced apart from the optical axis (OA) by a first distance (K1), and the first distance (K1) can be greater than the effective radius (R22) of the second lens 113. That is, R22 < K1 can be satisfied, and K1 ≥ 1.489 mm. The position of the lower end 124A of the inner end of the spacer 124 or the lower end of the inclined inner surface (SS1) is spaced from the optical axis (OA) by a second distance (K2), and the second distance (K2) can be greater than the effective radius (R31) of the third lens 115. That is, K1 < R31 < K2 can be satisfied, and K2 ≥ 1.695 mm.

The outer angle of the third inclined surface (SS1) of the above-mentioned spacer 124 has a fourth angle (R4) with respect to a horizontal straight line, and a straight line passing through the end (P4) of the effective area of the fourth surface (S4) of the second lens 113 and the end (P5) of the effective area of the fifth surface (S5) of the third lens 115 can have an inner angle of a third angle (R3) with respect to the horizontal straight line. The third and fourth angles (R3, R4) can satisfy R4 ≤ R3, and when this is satisfied, the first light (L1) can be prevented from being incident on the third inclined surface (SS1), and abnormal light incident on the third inclined surface (SS1) can be reflected and absorbed by the second light blocking films 123. Preferably, the condition: R4 < R3 or 1.5 < R3/R4 < 2.0 can be satisfied. That is, the fourth angle (R4) can be smaller than or equal to the angle of the light path of the first light (L1) passing between the second and third lenses 113, 115. The third and fourth angles (R3, R4) can satisfy the following conditions compared to the field of view (FOV).

$$\text{Condition 1: } FOV < R3$$

$$\text{Condition 2: } R4 \leq FOV$$

$$\text{Condition 3: } 54 \text{ degrees} < R3 < 90 \text{ degrees}$$

When the fourth surface (S4) of the second lens 113 has a convex shape based on the upper surface of the second light blocking film 123, the convex area (S41) between the second flange portion 113A and the end (P4) of the effective area of the fourth surface (S4) can vertically overlap with the end 124A of the spacing member 124. At this time, the spacer 124 is provided with a second recess 124B in an area corresponding to the convex area (S41) in order to block contact with the convex area (S41). The depth (T2) of the second recess 124B can be less than 50% of the thickness (T1) of the spacer 124. Condition: 0.1 < T2/T1 < 0.5 can be satisfied. Here, T2 is in the range of 0.35 mm ± 5%, and can vary depending on the spherical or aspherical coefficient of the fourth surface (S4).

The horizontal width (W1) of the second recess 124B can satisfy the following condition.

$$\text{Condition 1: } W1 \leq (K2-K1)$$

The fourth angle (R4) can satisfy the following condition.

$$\text{Condition 2: } R4 = \arctan(T3/(K2\text{-}K1))$$

By these conditions, the spacer 123 is positioned as much as possible along the path of the first light (L1), so that the occurrence of a phenomenon such as ghost or flare due to stray light on the image sensor 192 can be prevented.

Referring to FIG. 7, the support member 125 is a lower ring or a press-fit member, and includes an inner portion 51, a third recess 125A on the inner upper portion, and a lower protrusion 53. The inner portion 51 has an inclined surface, and the upper end of the inclined inner surface of the inner portion 51 corresponds to the end (P6) of the effective area of the sixth surface (S5) of the third lens 115, and can be inclined from the upper end to the lower end of the inclined inner surface. The inner portion 51 can vertically overlap with the ineffective area of the optical filter 196. The inclined inner surface of the inner portion 51 can be inclined at a sixth angle (R6) with respect to a horizontal straight line. The first light (L1) can be refracted from the third lens 115 toward the optical filter 196 along the inner side of the inclined inner surface of the inner portion 51. The distance between the upper end of the inclined inner surface of the inner portion 51 and the optical axis (OA) is K5, the distance between the lower end and the optical axis is K6, and the distance from the optical axis (OA) to the end (P7) of the effective area of the optical filter 196 can be defined as K7.

$$\text{Condition 1: } K6 < K5$$

$$\text{Condition 2: } R32 \leq K5$$

$$\text{Condition 3: } R32 < K7$$

$$\text{Condition 4: } K7 \leq K6$$

R32 is the effective radius of the sixth surface (S6) of the third lens 115.

The first light (L1) passes from the end (P6) of the effective area of the sixth surface (S6) of the third lens 115 to the end (P7) of the effective area of the optical filter 196, and at this time, the straight line connecting the ends (P6, P7) can be inclined at a fifth angle (R5) with respect to the horizontal straight line. The fifth and sixth angles (R5, R6) can satisfy $R6 \leq R5$, and when this is satisfied, the first light (L1) can be prevented from being incident on the inclined surface of the support member 125, and abnormal light incident on the inclined surface can be absorbed. Preferably, the condition: $R6 < R5$ or $1 < R5/R6 < 1.5$ can be satisfied. That is, the sixth angle (R6) can be smaller than or equal to the angle of the light path of the first light (L1) passing between the third lens 115 and the circumference of the optical filter 196. The fifth and sixth angles (R5, R6) can satisfy the following conditions compared to the angle of view (FOV).

$$\text{Condition 1: } FOV < R5$$

$$\text{Condition 2: } FOV < R6$$

$$\text{Condition 3: } 54 \text{ degrees} < R6 < 70 \text{ degrees}$$

When the edge portion of the effective area of the sixth surface (S6) of the third lens 115 has a convex shape based on the upper surface of the support member 125, the convex area between the third flange portion 115A and the end (P6) of the effective area of the sixth surface (S6) can overlap with the end 51 of the support member 125 in the vertical direction. At this time, the support member 125 is provided with a third recess 125A in an area corresponding to the convex area in order to block contact with the convex area.

The depth (T5-T6) of the third recess 125A can be less than 50% of the thickness (T5) of the support member 125. Condition: $0 < (T5\text{-}T6)/T5 < 0.2$ can be satisfied. Here, the value of (T5-T6) is in the range of 0.1 mm±5% and can vary depending on the spherical or aspherical coefficient of the sixth surface (S6).

The horizontal width (W2) of the third recess 125A can satisfy the following condition.

$$\text{Condition 1: } W2 \geq (K6\text{-}K5)$$

The sixth angle (R6) can satisfy the following condition.

$$\text{Condition 2: } R6 = \arctan(T6/(K6-K5))$$

By these conditions, the support member 125 is positioned as much as possible along the path of the first light (L1), so that the occurrence of a phenomenon such as ghost or flare due to stray light on the image sensor 192 can be blocked.

The lower surface 52 of the support member 125 is positioned on the non-effective area of the optical filter 196, and the lower protrusion 53 can be adhered by the adhesive material 129. The adhesive material 129 can be filled in the area between the inner surface of the lens holder 510 and the lower protrusion 53, and the area between the lower protrusion 53 and the optical filter 196, and can adhere them.

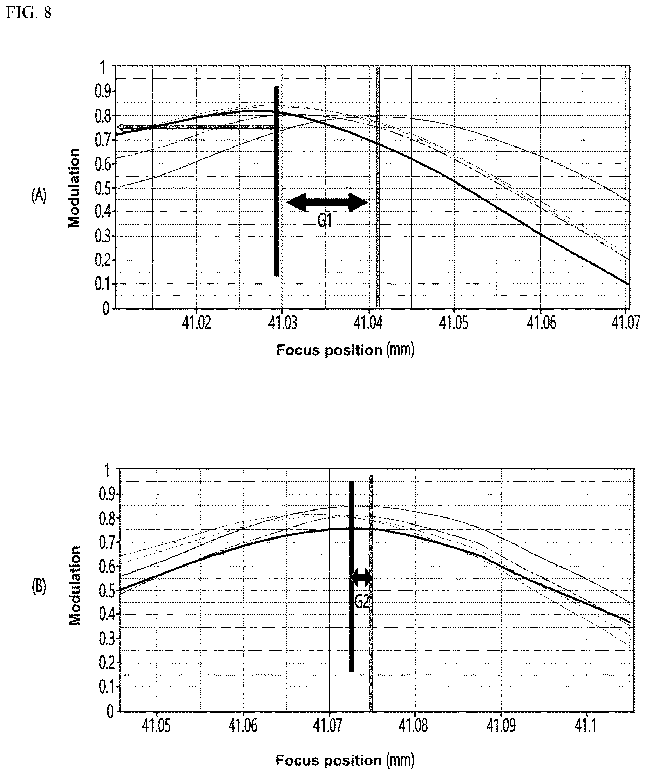

Referring to FIG. 8(A)(B), the MTF was measured while reducing the thickness of the first light blocking film 121, and the optimal focus position was optimized by reducing the thickness from the first thickness to the second thickness. FIG. 8(A) illustrates the MTF characteristics of the optical system when the first light blocking film has the first thickness, and the first thickness is $20\mu m$ or more, for example, in the range of $20\mu m$ to $26\mu m$. FIG. 8(A) illustrates the MTF characteristics of the optical system when the first light blocking film has the second thickness, and the second thickness is less than $20\mu m$, for example, in the range of $14\mu m$ to $18\mu m$. As shown in FIG. 8(A)(B), it can be seen that a gap difference (G1, G2) occurs in the center and peripheral areas of the MTF graph of the optical system, and the gap between the first and second lenses is reduced by the first light blocking film having the second thickness, so that the center position can improve peripheral resolution and minimize field curvature.

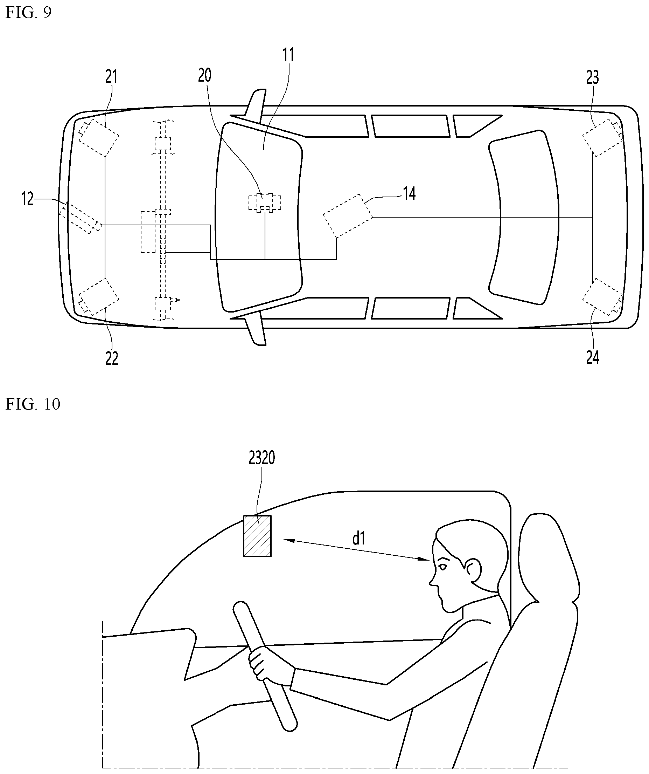

FIG. 9 is an example of a plan view of a vehicle to which a camera module according to an embodiment of the invention is applied. Referring to FIG. 9, a vehicle camera system according to an embodiment of the invention can include an image generating portion 11, a first information generating portion 12, a second information generating portion 21, 22, 23, 24, and a control portion 14. The image generating portion 11 can include at least one camera module 20 disposed in the vehicle, and can capture the front of the vehicle and/or the driver to generate a front image of the vehicle or an interior image of the vehicle. In addition, the image generation portion 11 can generate an image that captures the surroundings of the vehicle or the driver in one or more directions as well as the front of the vehicle using the camera module 20. Here, the front image and the surrounding images can be digital images, and can include color images, black and white images, and infrared images. In addition, the front image and the surrounding images can include still images and moving images. The image generation portion 11 provides the driver image, the front image, and the surrounding images to the control portion 14. Next, the first information generation portion 12 can include at least one radar and/or camera disposed in the vehicle, and detects the front of the vehicle to generate first detection information. Specifically, the first information generation portion 12 is disposed in the vehicle, and detects the positions and speeds of vehicles disposed in front of the vehicle, the presence and positions of pedestrians, and generates first detection information.

Using the first detection information generated by the first information generating portion 12, the distance between the own vehicle and the vehicle in front can be controlled to be maintained at a constant level, and the stability of vehicle operation can be improved in specific preset cases, such as when the driver wants to change the driving lane of the own vehicle or when parking in reverse. The first information generating portion 12 provides the first detection information to the control portion 14. Then, the second information generating portion 21, 22, 23, 24 detects each side of the own vehicle based on the front image generated by the image generating portion 11 and the first detection information generated by the first information generating portion 12, and generates second detection information. Specifically, the second information generating portion 21, 22, 23, 24 can include at least one radar and/or camera disposed on the own vehicle, and can detect the position and speed of vehicles located on the side of the own vehicle or capture images. Here, the second information generation portion 21, 22, 23, 24 can be placed on both sides of the front and rear of the vehicle, respectively.

This vehicle camera system can be equipped with the following camera modules, and can provide or process information acquired through the front, rear, each side, or corner area of the vehicle to the user to enable automatic driving or to protect the vehicle and objects from surrounding safety. As shown in FIG. 10, the camera module 2320 is spaced apart from the driver by a predetermined distance (d1), captures the driver's situation and status, and provides it to the vehicle management device so that it can be applied as a driver monitoring system. The optical system of the camera module according to the embodiment of the invention can be installed in multiple units in the vehicle for safety regulation, reinforcement of autonomous driving function, and increased convenience. In addition, the optical system of the camera module is applied in the vehicle as a component for control such as a lane keeping assistance system (LKAS), a lane departure warning system (LDWS), and a driver monitoring system (DMS). These vehicle camera modules can implement stable optical performance even when the ambient temperature changes, and provide a module with price competitiveness, thereby ensuring the reliability of vehicle parts.

The features, structures, effects, etc. described in the embodiments above are included in at least one embodiment of the present invention, and are not necessarily limited to one embodiment. Furthermore, the features, structures, effects, etc. exemplified in each embodiment can be combined or modified and implemented in other embodiments by a person having ordinary knowledge in the field to which the embodiments belong. Therefore, the contents related to such combinations and modifications should be interpreted as being included in the scope of the present invention. **In** addition, although the embodiments have been described above, they are merely examples and do not limit the present invention, and a person having ordinary knowledge in the field to which the present invention belongs will understand that various modifications and applications not exemplified above are possible without departing from the essential characteristics of the present embodiments. For example, each component specifically shown in the embodiments can be modified and implemented. And the differences related to such modifications and applications should be interpreted as being included in the scope of the present invention defined in the appended claims.

**Claims**

1. A camera module comprising:

   a head portion having a side wall portion and a receiving space and a plurality of ribs within the side wall portion;
   a lens barrel having an opening connected to the receiving space of the head portion and having a lens holder penetrated vertically through the opening;
   a lens portion having a plurality of lenses within the lens holder; and
   an image sensor configured to convert light incident through the plurality of lenses into an electrical signal,
   wherein each of the plurality of ribs is spaced apart from each other on an upper periphery of the opening,
   wherein each of the plurality of ribs has a first inclined plane on the upper periphery of the opening,
   wherein the opening has a second inclined plane on the periphery,
   wherein a first angle, which is an internal angle between the first inclined plane and a horizontal straight line, represents R1, a second angle, which is an internal angle between the second inclined plane and a horizontal straight line, represents R2, and a diagonal field of view of the image sensor represents FOV, and
   wherein a mathematical expression 1: $90°-(3/4*FOV) \le R1 \le 90°-(1/2*FOV)$ is satisfied.

2. The camera module according to claim 1, wherein a mathematical expression 2: $90°-(3/4*FOV) \le R2 \le 90°-(1/2*FOV)$ is satisfied.

3. The camera module according to claim 2, wherein the second angle is equal to or greater than the first angle.

4. The camera module according to any one of claims 1 to 3, wherein a mathematical expression 3: $40$ degrees $\le FOV \le 50$ degrees is satisfied.

5. The camera module according to claim 1, wherein the first lens, closest to an object, among the plurality of lenses has a convex shape on an object-side surface on the optical axis,
   wherein an upper end of the first inclined surface is disposed above a horizontal straight line passing through a center of an object-side surface of the first lens, and a lower end of the first inclined surface is disposed below the horizontal straight line passing through the center of the object-side surface of the first lens.

6. The camera module according to claim 5, wherein a height of the head portion represents D1, and a height of the lens holder represents D2, which is a height from a lower surface of the head portion to a lower end of the lens holder, and condition 1: $1 < D2/D1 < 3$ is satisfied.

7. The camera module according to claim 6, wherein a condition 2: $1 < D4/D5 < 3$ is satisfied.

8. The camera module according to claim 7, wherein a condition 3: $1 < (D4*2)/(D1+D2) < 2$ is satisfied.

9. The camera module according to claim 6, wherein a maximum diameter of the head portion represents B1, and a diameter of the opening represents B0, and
   wherein a condition 4: $0.1 < B0/B1 < 0.6$ is satisfied.

10. The camera module according to claim 5, wherein the plurality of ribs is radially disposed around the upper periphery of the opening,
    and an inner lower end of each of the plurality of ribs is spaced apart from the upper end of the opening.

11. A camera module comprising:

a head portion having a side wall portion and a receiving space and a plurality of ribs within the side wall portion;

a lens barrel having an opening connected to the receiving space of the head portion and having a lens holder penetrated vertically through the opening;

a plurality of lenses aligned along an optical axis within the lens holder;

a light blocking film disposed on an outer periphery between adjacent two lenses;

a spacing member disposed on an outer periphery to space apart adjacent plastic lenses among the plurality of lenses;

an optical filter disposed on a lower portion of the lens holder and on the sensor side of the last lens;

a support member disposed on an outer lower surface of the last lens and the periphery of the optical filter; and

an image sensor configured to convert light incident through the plurality of lenses into an electrical signal,

wherein each of the plurality of ribs is spaced apart from each other on an upper periphery of the opening,

wherein each of the plurality of ribs has a first inclined plane on the upper periphery of the opening,

wherein the opening has a second inclined plane on the periphery, a first angle, which is an internal angle between the first inclined plane and a horizontal straight line, represents R1, a second angle, which is an internal angle between the second inclined plane and a horizontal straight line, represents R2, and a diagonal field of view of the image sensor represents FOV, and

wherein a mathematical expression 1: $90°-(3/4*FOV) \leq R1 \leq 90°-(1/2*FOV)$ and a mathematical expression 2: $90°-(3/4*FOV) \leq R2 \leq 90°-(1/2*FOV)$ are satisfied.

12. The camera module according to claim 11, wherein a height of the head portion represents D1, a height of the lens holder represents D2, which is a height from a lower surface of the head portion to a lower end of the lens holder, an optical axis distance from a center of an object-side surface of the first lens closest to an object among the plurality of lenses to the image sensor represents TTL, and the number of the plurality of lenses is nL,

wherein a condition 1: $4 < (nL*D1*D2)/TTL < 8$ is satisfied, where nL is 3 to 5,

wherein 1/2 of a maximum diameter of the head portion represents D4, and

wherein a condition 2: $D4 \leq TTL$ is satisfied.

13. The camera module according to claim 11, wherein an inner side of the spacer has a third inclined plane, and an outer angle of the third inclined plane for a horizontal straight line represents R4, and an inner angle of a straight line passing through a last end of the effective area of a sensor-side surface of the lens disposed on the object side of the spacer and a last end of the effective area of the object-side surface of the lens disposed on the sensor side represents R3, and

wherein at least two of a condition 3: $FOV < R3$, a condition 4: $R4 \leq FOV$, and a condition 5: $54$ degrees $< R3 < 90$ degrees are satisfied.

14. The camera module according to claim 13, wherein the first lens, closest to an object, among the plurality of lenses has a convex shape on an object-side surface on the optical axis, and

wherein an upper end of the first inclined surface is disposed above a horizontal straight line passing through a center of an object-side surface of the first lens, and a lower end of the first inclined surface is disposed below the horizontal straight line passing through the center of the object-side surface of the first lens.

15. The camera module according to claim 14, wherein a height of the head portion represents D1, and a height of the lens holder represents D2, which is a height from a lower surface of the head portion to a lower end of the lens holder, 1/2 of a maximum diameter of the lens holder represents D5, a maximum diameter of the head portion represents B1, and a diameter of the opening represents B0, and

wherein at least two of a condition 6: $1 < D2/D1 < 3$, a condition 7: $1 < D4/DS < 3$, a condition 8: $1 < (D4*2)/(D1+D2) < 2$, and a condition 9: $0.1 < B0/B1 < 0.6$ are satisfied.

FIG. 1

FIG. 2

FIG. 3

FIG. 4

FIG. 5

FIG. 6

FIG. 7

FIG. 8

FIG. 9

FIG. 10

## INTERNATIONAL SEARCH REPORT

| International application No. |
| --- |
| **PCT/KR2023/017088** |

**A.    CLASSIFICATION OF SUBJECT MATTER**

**H04N 23/57**(2023.01)i; **H04N 23/54**(2023.01)i; **H04N 23/55**(2023.01)i; **G02B 7/02**(2006.01)i; **B60W 40/08**(2006.01)i; **G02B 13/00**(2006.01)i; **H04N 23/00**(2023.01)i; **G02B 1/04**(2006.01)i

According to International Patent Classification (IPC) or to both national classification and IPC

**B.    FIELDS SEARCHED**

Minimum documentation searched (classification system followed by classification symbols)

H04N 23/57(2023.01); G02B 13/06(2006.01); G02B 7/02(2006.01); G02B 7/04(2006.01); G03B 11/04(2006.01); G03B 17/02(2006.01); G03B 17/12(2006.01); G03B 5/00(2006.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 리브(rib), 렌즈 배럴(lens barrel), 경사(slope), 각도(angle), 화각 (Field of View, FOV)

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2014-0060471 A (SAMSUNG ELECTRO-MECHANICS CO., LTD.) 20 May 2014 (2014-05-20) See paragraphs [0029]-[0035]; and claim 1. | 1-15 |
| A | KR 10-2014-0146980 A (SAMSUNG ELECTRO-MECHANICS CO., LTD.) 29 December 2014 (2014-12-29) See paragraphs [0014] and [0056]-[0075]; and figure 7. | 1-15 |
| A | US 2018-0088297 A1 (NIDEC SANKYO CORPORATION) 29 March 2018 (2018-03-29) See paragraphs [0043]-[0073]; claims 1-18; and figures 1-3. | 1-15 |
| A | US 2018-0284398 A1 (DENSO CORPORATION) 04 October 2018 (2018-10-04) See paragraphs [0116]-[0378]; claims 1-69; and figures 1-74. | 1-15 |
| A | KR 10-2021-0128839 A (SAMSUNG ELECTRONICS CO., LTD.) 27 October 2021 (2021-10-27) See paragraphs [0015]-[0215]; claims 1-20; and figures 1-12. | 1-15 |

☐ Further documents are listed in the continuation of Box C.        ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 February 2024** | **06 February 2024** |

| Name and mailing address of the ISA/KR | Authorized officer |
| --- | --- |
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/017088**

| Patent document cited in search report | | | Publication date (day/month/year) | Patent family member(s) | | | Publication date (day/month/year) |
|---|---|---|---|---|---|---|---|
| KR | 10-2014-0060471 | A | 20 May 2014 | KR | 10-1453006 | B1 | 21 October 2014 |
| | | | | KR | 10-1453006 | B1 | 21 October 2014 |
| | | | | KR | 10-1771775 | B1 | 25 August 2017 |
| KR | 10-2014-0146980 | A | 29 December 2014 | CN | 104238063 | A | 24 December 2014 |
| | | | | KR | 10-1504030 | B1 | 18 March 2015 |
| | | | | US | 2014-0368723 | A1 | 18 December 2014 |
| US | 2018-0088297 | A1 | 29 March 2018 | CN | 107884901 | A | 06 April 2018 |
| | | | | EP | 3301493 | A1 | 04 April 2018 |
| | | | | EP | 3301493 | B1 | 14 August 2019 |
| | | | | JP | 2018-054922 | A | 05 April 2018 |
| | | | | US | 10527814 | B2 | 07 January 2020 |
| US | 2018-0284398 | A1 | 04 October 2018 | CN | 108696676 | A | 23 October 2018 |
| | | | | CN | 108696676 | B | 19 October 2021 |
| | | | | CN | 108696678 | A | 23 October 2018 |
| | | | | CN | 108696678 | B | 07 January 2022 |
| | | | | JP | 2019-074728 | A | 16 May 2019 |
| | | | | JP | 2022-009116 | A | 14 January 2022 |
| | | | | JP | 2022-009117 | A | 14 January 2022 |
| | | | | JP | 2022-009118 | A | 14 January 2022 |
| | | | | JP | 2023-058543 | A | 25 April 2023 |
| | | | | JP | 2023-165745 | A | 17 November 2023 |
| | | | | JP | 6988409 | B2 | 05 January 2022 |
| | | | | JP | 7255653 | B2 | 11 April 2023 |
| | | | | JP | 7405288 | B2 | 26 December 2023 |
| | | | | US | 10175560 | B2 | 08 January 2019 |
| | | | | US | 10291830 | B2 | 14 May 2019 |
| | | | | US | 10295798 | B2 | 21 May 2019 |
| | | | | US | 10317651 | B2 | 11 June 2019 |
| | | | | US | 10466450 | B2 | 05 November 2019 |
| | | | | US | 10474010 | B2 | 12 November 2019 |
| | | | | US | 10578840 | B2 | 03 March 2020 |
| | | | | US | 11054620 | B2 | 06 July 2021 |
| | | | | US | 11150448 | B2 | 19 October 2021 |
| | | | | US | 11678041 | B2 | 13 June 2023 |
| | | | | US | 11716525 | B2 | 01 August 2023 |
| | | | | US | 2018-0284399 | A1 | 04 October 2018 |
| | | | | US | 2018-0284400 | A1 | 04 October 2018 |
| | | | | US | 2018-0284577 | A1 | 04 October 2018 |
| | | | | US | 2018-0288291 | A1 | 04 October 2018 |
| | | | | US | 2019-0094660 | A1 | 28 March 2019 |
| | | | | US | 2019-0222727 | A1 | 18 July 2019 |
| | | | | US | 2019-0235215 | A1 | 01 August 2019 |
| | | | | US | 2019-0250383 | A1 | 15 August 2019 |
| | | | | US | 2020-0033567 | A1 | 30 January 2020 |
| | | | | US | 2021-0302703 | A1 | 30 September 2021 |
| KR | 10-2021-0128839 | A | 27 October 2021 | EP | 4123367 | A1 | 25 January 2023 |
| | | | | EP | 4123367 | A4 | 27 September 2023 |
| | | | | WO | 2021-210883 | A1 | 21 October 2021 |

Form PCT/ISA/210 (patent family annex) (July 2022)